# EUROPEAN PATENT APPLICATION

(11) **EP 2 960 261 A1**
(43) Date of publication of application: **30.12.2015**
(21) Application number: 14173431.9
(22) Date of filing: 23.06.2014
(51) Int. Cl.: C08F 220/18

(54) **Polymer system based on hydrophobically modified water soluble polymers**

(71) Applicant: Henkel AG&Co. KGAA, 40589 Düsseldorf (DE); Max-Planck-Gesellschaft zur Förderung der Wissenschaften e.V., 80539 München (DE)
(72) Inventor: Taden, Andreas, 40597 Düsseldorf (DE); Landfester, Katharina, 55122 Mainz (DE); Dundua, Alexander, 40227 Düsseldorf (DE)
(74) Representative: Peters, Frank M.

(57) **Abstract**

The present invention relates to a water-based polymer system comprising at least one hydrophobically modified water soluble polymer (HWSP), said HWSP (a) having an average molecular weight Mw below 500.000 g/mol; (b) having a solubility of 5 g/100 mL or more in a water-based solvent system containing at least 70 wt.-% water; and (c) comprising monomeric units comprising a hydrophobic moiety in an amount of 0.01 to 10 wt.-% relative to the total weight of the polymer; said polymer system at 0.1 % deformation and 0.1 Hz frequency having a storage modulus (G') of 10-40 Pa and a loss modulus (G") of 40-150 Pa, and at 0.01 % amplitude a crossover frequency of > 50 Hz. The invention further relates to methods for tuning the rheological properties of said polymer systems and the use of such polymer systems.

## Description

The present invention relates to a water-based polymer system, in particular adhesive system, comprising hydrophobically modified water soluble (associative) polymers with improved setting behavior via adjustable rheological properties. The invention further relates to methods for tuning the rheological properties of said polymer systems and the use of such systems in adhesive or personal care compositions.

Most synthetic water-based adhesives lack a fast setting mode, especially when the substrates cannot absorb water in significant amounts. This becomes even more pronounced when wet (and hard) surfaces have to be bonded together. In addition, many water-based adhesives lack adhesion to non-polar substrates, because they do not carry hydrophobic counterparts within their intrinsic structure.

With respect to labeling adhesives however a constantly growing market demand for the substitution of natural product based adhesives by synthetic products can be observed.

To date, alkali soluble latexes are widely used as rheology modifiers for numerous applications, such as water borne paints and coatings, oil recovery and in other fields. They represent a special class of polymers, which are stable suspensions at lower pH values, but deprotonate and become polyelectrolytes at higher pH. These types of systems are prepared by using emulsion polymerization technique and therefore are referred in literature as alkali soluble emulsion (ASE). Hydrophobically modified alkali soluble emulsions (HASE) are subject to intensive investigation as they exhibit superior performance and characteristics compared to conventional ASE. In the deprotonated state HASE systems contain ionogenic groups that are highly hydrophilic and provide water solubility for the polymer. Furthermore they are partially substituted by or modified with highly hydrophobic fragments, which leads to formation of hydrophobic junctions due to hydrophobic forces and consequently to adjustable rheological and mechanical behavior. HASE systems represent an improvement over non-modified alkali soluble emulsions, as they show associative behavior based on hydrophobic segments which can aggregate in the aqueous phase. This behavior shares strong similarity with surfactant micellation and can counteract the electrostatic repulsion forces from the polyelectrolyte backbones. In addition, it leads to drastically altered rheological and mechanical properties. This micellation-like association corresponds to the formation of hydrophobic domains that physically crosslink the polyelectrolyte network. Unlike covalent crosslinking this hydrophobic association is non-permanent and can reversibly disassemble upon application of relatively mild shear forces and once said shear forces are no longer applied self-organized reassembly occurs. Accordingly, the introduction of physical crosslinks can be used to design materials with highly efficient energy dissipation mechanisms or self-healing characteristics.

Generally, hydrophobic modification of water-soluble polymers with different backbone chemistries is known, the most prominent examples including HASE being:
- HASE: Hydrophobically-modified alkali soluble/swellable emulsion
- HEUR: Hydrophobically-modified ethyleneoxide urethane rheology modifier
- HMPE: Hydrophobically-modified polyether
- HMHEC: Hydrophobically-modified hydroxyethyl cellulose

The above listed polymer categories are frequently used as associative rheology modifiers in a variety of applications, like paints, protective coatings, detergents, cosmetics and more. Typically, they are used as additives in small amounts and possess either high molecular weights or a high degree of hydrophobic modification to maximize the rheological impact. In the following, hydrophobically modified water-soluble polymer with association capability and stimuli-response, including those listed above, will be referred to as hydrophobically modified water-soluble polymers (HWSP).

HWSP association bears strong similarities with surfactant micellation, which was studied in great detail by various research groups and fundamentally describes the spontaneous self-association of highly amphiphilic molecules driven by hydrophobic interaction forces. For example it is well known, that in case of n-alkyl-substituted surfactants the critical micellation concentration (CMC) is strongly dependent on the number of carbon atoms in the alkyl chain as the hydrophobic part. As a general rule, the CMC decreases by a factor of about 2 for ionic surfactants (without added salt) and by a factor of about 3 for non-ionic surfactants on adding one methylene group to the alkyl chain. Longer n-alkyl surfactant chains also lead to higher aggregation number in micelles, and correspondingly carbon chain length in hydrophobically modified polymer systems shows significant impact on the physically crosslinked network structure and the rheological behavior.

HASE polymers can be seen as model system to study the general applicability of hydrophobic forces to obtain water-based adhesives with specific stimuli-response and improved properties based on HWSP. One reason to select HASE as model system for HWSP is that based on advanced polymerization technology their composition including the degree of hydrophobic-modification and molecular weight can be adjusted over a wide range. This situation allows the investigation of various HASE polymers with systematically changed composition and the use of these results for deriving important structure-property relationships that can be generalized to other HWSP systems.

Stimuli-responsive materials have attracted significant research interest over the recent years, because their adaptive nature enables convenient control for a variety of different applications, ranging from sensors, drug delivery, tissue engineering to more simplistic rheology modifiers. In each case, the stimuli-responsiveness needs to be well understood and adjustable, which is a mandatory requirement for integrated technological solutions in order to comply with specific functional needs. For this reason, the elucidation of the most important structure-property relationships is of fundamental importance and another reason why HASE systems have been utilized to identify how HSWP can be turned into water-based adhesives with adjustable stimuli-response.

At present, many known synthetic adhesive labeling systems including standard (H)ASE have the drawback that they exhibit a very strong drop in viscosity upon dilution with water accompanied by a significant drop in their adhesive performance capabilities, which leads to issues for example in wet bottle labeling. For such applications, it would be desirable to have synthetic alternatives to "casein" labeling adhesives available. Casein is a natural protein with a complex structure and interaction behavior forming various conformations, aggregates and (sub)-structures starting to "thicken" when it comes into contact with a cold and wet interface. So far it remains difficult to obtain synthetic labeling adhesives which can mimic this behavior.

There is thus need in the art for systems that overcome the above drawbacks of existing technologies. The present invention meets this need by providing a water-based polymer system based on hydrophobically modified water soluble associative polymers that allows tuning of its rheological behavior. It has been found that in these systems regulation of storage and loss modulus and tan δ (damping or loss factor) over a wide range is easily possible simply by varying the composition and the molecular weight of the polymers. Such properties are of immense importance for multiple applications, such as adhesive systems, rheology modifiers or nanogels for drug delivery applications.

The polymer systems described herein are advantageous as their rheological properties (1) can be adjusted over a wide range just by small changes in chemical and molecular weight compositions; and (2) postsynthetic tuning of rheological properties and dilution induced thickening using additives is possible ("casein mimetic" behavior).

In a first aspect, the present invention thus relates to a water-based polymer system comprising at least one hydrophobically modified water soluble polymer (HWSP), said HWSP
a. having an average molecular weight Mw between 10.000 g/mol and 500.000 g/mol, preferably between 15.000 and 200.000 g/mol, more preferably between 20.000 g/mol and 100.000 g/mol, most preferably 25.000 to 80.000 g/mol;
b. having a solubility of 5 g/100 mL or more in a water-based solvent system containing at least 70 wt.-%, preferably at least 80 wt.-%, more preferably at least 90 wt.-% water, at 60°C, with the remainder of the water-based solvent system optionally being an amphiphilic additive; and
c. comprising monomeric units in an amount of 0.01 to 10 wt.-%, preferably 0.1 to 10 wt.-%, more preferably 0.5 to 5 wt.-% relative to the total weight of the polymer, wherein said monomeric units comprise a hydrophobic moiety, preferably a substituted or unsubstituted C₁₀-C₂₆ hydrocarbon moiety, more preferably a substituted or unsubstituted C₁₀-C₂₆ alkyl moiety;
wherein said polymer system at 0.1 % deformation and 0.1 Hz frequency has a storage modulus (G') of 10-40 Pa, preferably 20-30 Pa, and a loss modulus (G") of 40-150 Pa, preferably 50-80 Pa, and at 0.01 % amplitude a crossover frequency of > 50 Hz, preferably 50-150 Hz, more preferably 50-100 Hz and most preferably 60-90 Hz.

The water-based polymer system may in various embodiments be a hydrophobically modified alkali soluble associative (HASE) polymer system, with the HSWP preferably being an acrylic HASE polymer.

In another aspect, the invention is directed to a method for tuning the rheological properties of the water-based polymer system described herein. Said method may comprise adding an amphiphilic additive, preferably a hydrotrope, to said adhesive system to decrease the viscosity of said polymer system and, optionally, adding water to said system including the hydrotrope to increase the viscosity ("dilution-induced thickening").

In a further aspect, the invention is also directed to a method for tuning the rheological properties of the water-based polymer system described herein, said method comprising neutralizing the HWSP with a suitable alkaline agent.

In still another aspect, the invention also features adhesive and personal care compositions that comprise or consist of the water-based polymer systems described herein. The adhesives may preferably be labeling adhesives, for example for the labeling of bottles.

In a still further aspect, the invention also encompasses the use of the water-based polymer system described herein as a component of an adhesive composition, preferably a labeling adhesive, or as a component of a personal care composition.

In the following, the invention is described in greater detail. It is however understood that the present invention is not limited to the below embodiments, but can easily be adapted to use other monomers, hydrotropes, stabilizers, surfactants, and polymerization initiators. Such alternative embodiments are also encompassed by the scope of the instant invention. In particular, when in the below detailed description reference is made to HASE systems it is understood that these systems serve for illustrative purposes only and that the invention is not limited to such systems, but encompasses other associative systems, such as those described above. Transferring the below embodiments described in relation to HASE systems to other hydrophobically modified associative polymer systems would be a matter of mere routine for those skilled in the art and is thus contemplated in and fully covered by the present invention.

The HWSPs of the invention have a solubility of 5 g/100 mL or more in a water-based solvent system containing at least 70 wt.-%, preferably at least 80 wt.-%, more preferably at least 90 wt.-% water, at 60°C, with the remainder of the water-based solvent system optionally being an amphiphilic additive. The amphiphilic additives that can be used in such solvent systems are described in more detail below. To determine the solubility, a "Metrohm photometer 662" equipped with a measuring probe is used to measure light transmittance. For the actual measurement, visible light (full spectrum) from the source is guided via optical fibers to the probe, which is immersed in the liquid sample. The light emerges from the tip of the probe, travels through the sample solution, is reflected from a mirror and is guided through optical fibers to the detector. Before reaching the detector, an optical filter may be used to allow selective measurement of a certain wavelength. For the present measurements, light of a wavelength of 600 nm was detected. An Ahlborn Almemo multimeter was used to digitally monitor and record transmittance (analog output from photometer) and a light transmittance of ≥98 % (at the selected wavelength) was considered as complete solubility. "A solubility of 5 g/100 mL or more", in the sense of the present invention therefore refers to a polymer system that, if dissolved in a water-based solvent system as described above at a concentration of 5 g/100mL or more, has a transmittance of light of a wavelength of 600 nm of ≥98% at 60°C, as measured with the above-described system.

The polymer systems of the invention are preferably derived from an emulsion or dispersion, in particular O/W heterophase systems, with the continuous phase being water or an aqueous (water-based) solvent, as described below.

The molecular weight M_{w} can be determined using any known method, including, but not limited to gel permeation chromatography (GPC). The preferred method is GPC with tetrahydrofuran (THF) as eluent according to DIN 55672-1:2007-08, preferably with measurement conditions of 35 °C. For calibration, polymethylmethacrylate standards are used to determine the apparent molecular weights. Based on this method, the molecular weight of the HWSP is between 10.000 g/mol and 500.000 g/mol, preferably between 15.000 and 200.000 g/mol, more preferably between 20.000 g/mol and 100.000 g/mol, most preferably 25.000 to 80.000 g/mol.

The monomeric units comprising a hydrophobic moiety, preferably a substituted or unsubstituted C₁₀-C₂₆ hydrocarbon moiety, more preferably a substituted or unsubstituted C₁₀-C₂₆ alkyl moiety, can be any monomers that are compatible with the polymer backbone chemistry. The hydrophobic moieties are preferably hydrocarbon moieties with 10 to 26 carbon atoms, but may comprise one or more heteroatoms in the main chain. It is however preferred that the hydrophobic moiety is an unsubstituted C₁₀-C₂₆ alkyl moiety that may be linear or branched, including, without limitation, lauryl, tetradecyl, hexadecyl, octadecyl, eicosanyl, and behenyl groups. These groups may be coupled to the reactive moiety of the monomer, such as, without limitation, an ethylenically unsaturated group, via a direct covalent bond or a suitable linker. Suitable linkers include, without limitation, polyoxyalkylenes, such as polyoxyethylene, polyoxypropylene or copolymers thereof.

In various embodiments of the invention, the HWSPs are pH responsive latexes that are stable suspensions at lower pH values, but deprotonate and become polyelectrolytes at higher pH and that contain ionogenic groups, which are partially substituted by or modified with highly hydrophobic fragments, which leads to formation of hydrophobic junctions due to hydrophobic forces and consequently to adjustable rheological and mechanical behavior. Such pH responsive latexes show sharp increase in viscosity upon increasing pH due to deprotonation of acid groups and high electrostatic repulsion, while incorporation of hydrophobic groups facilitates the formation of hydrophobic junctions and alters (and when properly regulated - improves) rheological behavior.

In various embodiments, the HWSPs are HASE polymers, in particular hydrophobically modified acrylic polymers that comprise acid groups distributed throughout the polymer chain. Such HASE polymers may comprise mildly hydrophobic repeating units that together with the acidic repeating units form the bulk of the polymer, while the associative properties are imparted by a small percentage (usually up to 10 %) of highly hydrophobic repeating units, or so-called ultrahydrophobes. However, as already described above, the present invention is not limited to such HASE polymers.

The term "pH responsive", as used herein, relates to the property of materials, especially polymers, to respond to the changes in the pH of the surrounding medium by protonation and deprotonation of ionic groups, in particular carboxylic acid groups in the polymer chain. Protonation and deprotonation of such pH responsive polymers is reversible and influences their rheological properties due to decreased and increased electrostatic repulsion in the polymer, especially in polar solvents (e.g. water or water/alcohol mixtures). Such materials may swell or collapse depending on the pH of their environment.

In various embodiments of the invention, the HWSP, in particular the HASE polymer, is obtainable by polymerizing a reaction mixture comprising a monomer mixture comprising:
(a) at least one, optionally ethylenically unsaturated, monomer comprising a hydrophobic moiety, preferably a substituted or unsubstituted C₁₀-C₂₆ hydrocarbon moiety, more preferably a substituted or unsubstituted C₁₀-C₂₆ alkyl moiety, wherein the monomer is optionally a C₃-C₅ carboxylic acid ester monomer containing a C₁₀-C₂₆ alkyl moiety, preferably a C₃-C₅ carboxylic acid C₁₀-C₂₆ alkyl ester, in an amount of 0.01 to 10 wt.-%, preferably 0.1 to 10 wt.-%, more preferably 0.5 to 5 wt.-% relative to the monomer mixture;
(b) at least one ethylenically unsaturated C₃-C₈ carboxylic acid monomer, preferably in an amount of 10 to 50 wt.-%, more preferably 20 to 50 wt.-% relative to the monomer mixture; and
(c) at least one, preferably at least two, ethylenically unsaturated C3-C5 carboxylic acid C1-C8 alkyl ester monomer(s), preferably in an amount of 50 to 89.99 wt.-%, more preferably 65 to 79.99 wt.-% relative to the monomer mixture.

"At least one", as used herein, relates to one or more, preferably 1, 2, 3, 4, 5, 6, 7, 8, 9, 10 or more. It is understood that this term, when used in combination with the described monomers or surfactants, does not relate to the absolute number of molecules, but rather to the type of the monomer or surfactant used. By way of example only, the term "at least one C₃-C₅ carboxylic acid monomer" thus means that one or more different C₃-C₅ carboxylic acid monomers can be used, for example methacrylic acid or a combination of methacrylic acid and acrylic acid.

The monomers used in the HASE polymers described herein may be ethylenically unsaturated carboxylic acids and alkyl esters thereof. Typical monomers based on ethylenically unsaturated compounds that can be used according to the present invention, without being limited thereto, include maleic acid, methylmaleic acid, fumaric acid, and the respective alkyl esters thereof, (meth)acrylic acid and esters thereof, crotonic acid and esters thereof, itaconic acid and esters thereof, the acid alkyl esters being in each case selected from esters having C₁-C₈ carbon atoms or C₁₀-C₂₆ carbon atoms. The alkyl esters described herein can be branched or straight chain.

In various embodiments, the ethylenically unsaturated C₃-C₅ carboxylic acid monomers are selected from methacrylic acid (MAA), acrylic acid (AA), fumaric acid, methyl maleic acid, maleic acid, itaconic acid, crotonic acid, or mixtures thereof, preferably methacrylic acid, acrylic acid or mixtures thereof, more preferably methacrylic acid. Also contemplated are the respective salts thereof, i.e. the salts of the listed acids with any suitable cation, preferably metal cation, such as, without limitation sodium and potassium, or ammonium.

The ethylenically unsaturated carboxylic acid alkyl ester monomers used according to the methods described herein are preferably acrylic acid or methacrylic acid alkyl esters.

The ethylenically unsaturated C₃-C₅ carboxylic acid C₁-C₈ alkyl ester monomer may be a methacrylic acid C₁-C₈ alkyl ester monomer, preferably a methacrylic acid C₁-C₃ alkyl ester monomer, more preferably a methacrylic acid methyl ester monomer. Another preferred monomer is methacrylic acid 2-ethylhexyl ester. Alternatively, the ethylenically unsaturated C₃-C₅ carboxylic acid C₁-C₈ alkyl ester monomer may be an acrylic acid C₂-C₈ alkyl ester monomer, preferably an acrylic acid C₃-C₈ alkyl ester monomer, more preferably an acrylic acid butyl ester monomer. Another preferred monomer is acrylic acid 2-ethylhexyl ester. Also contemplated is the use of a mixture of the afore-described methacrylic acid alkyl esters and acrylic acid alkyl esters. In a preferred embodiment, the ethylenically unsaturated C₃-C₅ carboxylic acid C₁-C₈ alkyl ester monomer comprises or consists of a mixture of methyl methacrylate and butyl acrylate. Such mixture can advantageously replace the commonly used ethyl acrylate, which is less desirable due to its low odor threshold. In such a mixture, the butyl acrylate or the 2-ethylhexyl acrylate lowers the glass transition temperature and maintains miniemulsion droplet stability due to its higher hydrophobicity compared to other monomers employed.

In various embodiments, the ethylenically unsaturated monomer comprising a hydrophobic moiety is:
i. a methacrylic acid ester with a moiety comprising or consisting of an C₁₀-C₂₆ alkyl group, preferably a methacrylic acid C₁₀-C₂₆ alkyl ester monomer or a methacrylic acid polyoxyalkylene C₁₀-C₂₆ alkyl ester monomer, more preferably a methacrylic acid C₁₀-C₂₂ alkyl ester monomer or a methacrylic acid polyoxyalkylene C₁₀-C₂₂ alkyl ester monomer, most preferably a methacrylic acid C₁₂-C₁₈ alkyl ester monomer or a methacrylic acid polyethylene oxide C₁₀-C₂₂ alkyl ester monomer; or
ii. an acrylic acid ester with a moiety comprising or consisting of an C₁₀-C₂₆ alkyl group, preferably an acrylic acid C₁₀-C₂₆ alkyl ester monomer or an acrylic acid polyoxyalkylene C₁₀-C₂₆ alkyl ester monomer, more preferably an acrylic acid C₁₀-C₂₂ alkyl ester monomer or an acrylic acid polyoxyalkylene C₁₀-C₂₂ alkyl ester monomer, most preferably an acrylic acid C₁₂-C₁₈ alkyl ester monomer or an acrylic acid polyethylene oxide C₁₀-C₂₂ alkyl ester monomer; or
iii. a mixture of (i) and (ii).

In such embodiments, the ethylenically unsaturated C₃-C₅ carboxylic acid C₁₀-C₂₈ alkyl ester monomer may be an acrylic acid C₁₄-C₁₈alkyl ester monomer. Suitable monomers include, without limitation, lauryl (meth)acrylate (LA or LMA), tetradecyl (meth)acrylate (TDA or TDMA), hexadecyl (meth)acrylate (HAD or HDMA), octadecyl (meth)acrylate (ODA or ODMA), eicosanyl (meth)acrylate, behenyl (meth)acrylate and mixtures thereof. Again, mixtures of the afore-described methacrylic acid alkyl esters and acrylic acid alkyl esters may be used.

In various embodiments, any of the above esters may comprise one or more functional groups in the alkyl moiety provided that the functional groups do not react with each other under the reaction conditions described herein. Exemplary compounds include those that comprise amino, hydroxyl or N-methylol groups in the alcohol chain, such as hydroxyethyl (meth)acrylate, hydroxypropyl (meth)acrylate, hydroxybutyl (meth)acrylate, (meth)acrylamide, hydroxyethyl acrylamide, allyl carbamate, N-methylol (meth)acrylamide, N-methylol allyl carbamate as well as the N-methylolesters, acrylamidomethoxy acetic acid methyl esters, N-dimethylamino propyl methacrylamide, N-methyl (meth)acrylamide, N-butyl (meth)acrylamide, N-cyclohexyl (meth)acrylamide, acryl nitrile and the like. The amount of these functionalized compounds should however preferably be below 15 wt.-% relative to the total amount of these esters.

In one specific embodiment of the described methods, the at least one ethylenically unsaturated C₃-C₅ carboxylic acid monomer is selected from the group consisting of methacrylic acid (MAA) and acrylic acid (AA), the at least one ethylenically unsaturated C₃-C₅ carboxylic acid C₁-C₈ alkyl ester monomer is selected from the group consisting of methyl methacrylate (MMA), butyl acrylate (BA), 2-ethylhexyl acrylate (2-EHA) and mixtures thereof, preferably mixtures of MMA and BA or MMA and 2-EHA, and the at least one ethylenically unsaturated C₃-C₅ carboxylic acid C₁₀-C₂₆ alkyl ester monomer is selected from the group consisting of lauryl (meth)acrylate (LA or LMA), tetradecyl (meth)acrylate (TDA or TDMA), hexadecyl (meth)acrylate (HAD or HDMA), octadecyl (meth)acrylate (ODA or ODMA), eicosanyl (meth)acrylate, behenyl (meth)acrylate and mixtures thereof.

In addition to the above-listed monomers, the monomer mixture may further comprise other monomers, for example monomers comprising siloxane groups, such as, without limitation, vinyl trimethoxy silanes, alkylvinyl dialkoxy silanes or (meth)acryloxyalkyl trialkoxy silanes. Concrete examples include, without limitation, (meth)acryloxyethyl trimethoxy silane and (meth)acryloxypropyl trimethoxy silane. Also suitable are polysiloxane macromonomers having a molecular weight Mₙ of 1000 to 40000 and comprising 0.5 to 2.5 ethylenically unsaturated double bonds per molecule. Preferred compounds are those that have a molecular weight Mₙ of 2000 to 20000, preferably 2500 to 10000, more preferably 3000 to 7000, and 0.5 to 2.5, preferably 0.5 to 1.5 ethylenically unsaturated double bonds per molecule. Such compounds are for example disclosed on pages 5-7 of DE 38 07 571 A1, columns 3-7 of DE 37 06 095 A1, pages 3-6 of EP 0358153 B1, columns 5-9 of US 4,754,014 A1, in DE 44 21 823 A1 or on pages 12-18 of WO 92/22615. The molecular weight Mₙ can be determined similarly as the molecular weight M_{w} by GPC (Gel Permeation Chromatography), preferably in combination with a universal calibration method, i.e. via the utilization of a differential viscometer detector (GPC-DV).

Other suitable monomers include polyunsaturated monomers that can acts as crosslinkers. If present, such polyunsaturated monomers are only present in comparably small amounts, i.e. typically up to 5 wt.-%, preferably up to 3 wt.-% relative to the total weight of the monomer mixture. Preferred are monomers that contain two vinyl groups. Exemplary compounds that are suitable as crosslinking monomers include, without limitation, diallyl phthalates, diallyl maleinate, triallyl cyanurate, tetraallyl oxyethane, divinyl benzene, allyl acrylate, allyl methacrylate, vinyl crotonate, butanediol-1,4-dimethacrylate, triethyleneglycol dimethacrylate, divinyl adipate and combinations thereof.

In various embodiments, the monomer mixture contains ethylenically unsaturated carboxylic acid monomers in a concentration range of from 10 to 50 wt.%, preferably 20-50 wt.%, more preferably 20-40 wt.%. The at least one ethylenically unsaturated C₃-C₅ carboxylic acid C₁-C₈ alkyl ester monomer may be contained in a concentration range of from 50 to 89.99 wt.%, preferably 65-79.99 wt.%, more preferably 65-75 wt.%. The highly hydrophobic monomer, e.g. the ethylenically unsaturated C₃-C₅ carboxylic acid C₁₀-C₂₆ alkyl ester monomer may be comprised in a concentration range of from 0.01 to 10 wt.%, preferably 0.1-10 wt.%, particularly preferably 0.5-5 wt.%.

As described above, the monomer mixture may comprise a mixture of methyl methacrylate and butyl acrylate. Those two monomers are preferably used in a weight ratio of methyl methacrylate: butyl acrylate of 1:2 to 6:1.

In various embodiments, the monomer mixture comprises methacrylic acid (MAA), methyl methacrylate (MMA) and butyl acrylate (BA) in amounts of 30-70 wt.-% MMA, 10-30 wt.-% BA and 20-40 wt.-% MAA.

All afore-described percentages relate, if not otherwise indicated, to the total number of monomers present in the monomer mixture and optionally add up to 100 wt.-%.

The ethylenically unsaturated monomer comprising a hydrophobic moiety, for example the ethylenically unsaturated C₃-C₅ carboxylic acid C₁₀-C₂₆ alkyl ester monomer, may have a solubility in water at 60 °C of < 0,01 wt.%.

The ethylenically unsaturated C₃-C₅ carboxylic acid monomers may have a solubility in water at 60 °C of > 25 wt.%.

The ethylenically unsaturated C₃-C₅ carboxylic acid C₁-C₈ alkyl ester monomers may have a solubility in water at 60 °C of > 0,01 wt.% and < 25 wt.%.

The solubility of the monomers, as referenced above, is the solubility in water as determined by gas chromatography according to Chai et al. (Chai et al. (2005) "Simplified multiple headspace extraction gas chromatographic techniques for determination of monomer solubility in water", Journal of Chromatography, Vol. 1070 (1-2), pages 225-229) and described in Chai et al. (Chai et al. (2005) "Measurement of the solubilities of vinylic monomers in water", Industrial & Engineering Chemistry Research, Vol. 44(14), pages 5256-5258).

The reaction mixture may further comprise at least one "stabilizer". The term "stabilizer", as used herein, relates to a class of molecules that can stabilize the droplets in a dispersion or emulsion, i.e. prevent coagulation or coalescence. The stabilizer molecules may adhere to or associate with the droplet surface. Furthermore the stabilizer may covalently react with the monomers upon polymerization. In various embodiments the stabilizer molecules comprise a hydrophilic and a hydrophobic part, with the hydrophobic part interacting with the droplet and the hydrophilic part be exposed to the solvent. The stabilizers may be surfactants and may bear an electric charge, for example may be anionic surfactants. Exemplary stabilizers that can be used in accordance with the present invention include sodium dodecyl sulfate (SDS).

Other preferred anionic surfactants useful as stabilizers in accordance with the present invention are compounds of the general formula I 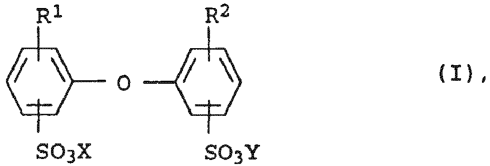 wherein R¹ and R² are independently hydrogen or C₄-C₂₄ alkyl provided that not both are hydrogen, and X and Y represent alkali metal ions or ammonium ions. R¹ and R² are preferably linear or branched alkyl with 6 to 18 carbon atoms or hydrogen, in particular alkyl with 6, 12 or 16 carbon atoms. X and Y are preferably sodium, potassium, ammonium, with sodium being particularly preferred. Preferred compounds are those wherein X and Y are sodium, R¹ is a branched alkyl group with 12 carbon atoms and R² is hydrogen or the same as R¹. Typically, technical mixtures are used that comprise 50 to 90 wt.-% of the monoalkylated product, such as Dowfax® 2A1 (Dow Chemical Company). Such compounds are widely known, for example from US-A 4,269,749, and are commercially available.

Alternative stabilizers/surfactants that may also be used according to the invention are known to those skilled in the art and include for example other known surfactants or hydrophobically modified polar polymers.

In various embodiments, the reaction mixtures described herein can further comprise other protective colloids, such as polyvinyl alcohols, in particular hydrophobically modified polyvinyl alcohols, cellulose derivatives or vinyl pyrrolidone. A more detailed description of suitable compounds can, for example, be found in Houben-Weyl, Methoden der Organischen Chemie, Bd. 14/1, Makromolekulare Stoffe, Georg-Thieme-Verlag, Stuttgart, 1961, pages 411-420.

The total amount of surfactants in the reaction mixture is typically up to 30 wt.-%, preferably 0.1 to 10 wt.-%, more preferably 0.2 to 6 wt.-%, relative to the total weight of the reaction mixture.

Exemplary methods for the production of pH responsive latexes, preferably the above described HASE systems, include the steps of:
(i) preparing a reaction mixture by combining an aqueous solvent containing at least one stabilizer, preferably at least one surfactant, and a monomer mixture as defined above;
(ii) homogenizing said reaction mixture of step (i) to generate stabilized miniemulsion droplets containing the monomer mixture;
(iii) adding a polymerization initiator, preferably a water-soluble polymerization initiator, to polymerize the miniemulsion droplets.

In these methods, the type of monomers and their amount may be defined identical to the preferred embodiments described above in connection with the described polymers systems. The stabilizers useful in such methods are also those described in more detail above.

In a first step of the method to synthesize pH responsive latexes, a reaction mixture, preferably a pre-emulsion, is prepared. The reaction mixture contains the above-described monomer mixture and preferably at least one stabilizer/surfactant, as defined above, emulsified in an aqueous solvent.

The aqueous solvent contains water as the main constituent or may consist of water. In various embodiments, the aqueous solvent contains water as the main constituent and additionally contains one or more non-aqueous solvents, for example selected from the group of monohydric or polyhydric alcohols, alkanolamines or glycol ethers, provided that they are miscible with water in the concentration range given. The solvents are preferably selected from ethanol; n- or i-propanol; butanols; hexanols; glycols; propanediols; butanediols; pentanediols, hexanediols, heptanediols, octanediols, glycerol; diglycols; ethyl, propyl, butyl or hexyl diglycol; hexylene glycol; ethylene glycol methyl ether; ethylene glycol ethyl ether; ethylene glycol propyl ether; ethylene glycol butyl ether; ethylene glycol hexyl ether; diethylene glycol methyl ether; diethylene glycol ethyl ether; diethylene glycol propyl ether; diethylene glycol butyl ether; diethylene glycol hexyl ether; propylene glycol methyl, ethyl, propyl, butyl or hexyl ether; dipropylene glycol methyl, ethyl, propyl, butyl or hexyl ether; di-isopropylene glycol methyl, ethyl, propyl, butyl or hexyl ether; methoxy, ethoxy or butoxy triglycol; trimethylolpropane; 1-butoxyethoxy-2-propanol, 3-methyl-3-methoxybutanol, propylene glycol t-butyl ether and mixtures of these solvents. In the aqueous solvent, non-aqueous solvents may be used in quantities of between 0.5 and 35 wt.%, but preferably less than 30 wt.% and in particular less than 25 wt.% relative to the total weight of the solvent. It is preferred that for the preparation of the miniemulsion, i.e. prior to the polymerization, the aqueous solvent does not contain any non-aqueous solvents. These are preferably only added after the polymerization is completed, for example prior to the neutralization.

The aqueous solvent contains the stabilizers/surfactants, usually in form of a solution of the stabilizer/surfactant.

The obtained reaction mixture or pre-emulsion is subsequently homogenized in order to achieve miniemulsion droplets containing the above monomers with an even distribution especially with respect to size of the miniemulsion droplets and composition of the droplets resulting in a colloidally stable miniemulsion.

Homogenization of the reaction mixture or pre-emulsion in order to form the stabilized miniemulsions described herein is achieved by combining the monomers in liquid form, for example in form of a solution in water in the presence of a stabilizer or surfactant under the action of a shear force, for example by a high-pressure homogenizer having an energy input in the range of from 10³ to 10⁵ J per second per liter of the emulsion and/or shear rates of at least 1000000/s. The shear rates can be readily determined by those skilled in the art by methods well-known in the field. The shear force can also be brought about by means of ultrasound, the ultrasonic treatment preferably occurring at 10 to 60 kHz and for no longer than 300 seconds, with an initial output power of the ultrasound source that produces a heating of at least 1°C, but no more than 10°C of the volumes combined at a mixing temperature of 25°C.

The high shear process, as used herein, can be any known process for dispersing or emulsifying in a high shear field. Examples for suitable processes are, for example, disclosed in DE 196 28 142 A1, page 5, lines 1-30, DE 196 28 143 A 1, page 7, lines 30-58, and EP 0 401 565 A 1.

The term "miniemulsion" or "emulsion", as used herein, relates to oil-in-water (O/W) emulsions, i.e. emulsions in which water is used in excess and is the continuous medium. In the described processes, stable droplets are obtained, which have typically a size between 50 and 500 nm, preferably between 70 and 300 nm.

The polymerization of the monomer mixture is carried out by the appropriate polymerization process, preferably by radical polymerization. For this purpose, polymerization initiators can be used. Readily usable initiators may be thermally activatable, radiation activatable, such as UV initiators, or redox activatable and are preferably selected from radical initiators. Suitable radical initiators are widely known in the art and readily available and include organic azo or peroxo compounds. The initiators are preferably water-soluble. When the polymerization is initiated by water-soluble initiator, free radicals generate in aqueous phase first and diffuse to water/monomer interface to initiate the polymerization inside droplets. The polymerization results in a highly soluble polymer after deprotonation ("neutralization step"), even with low contents of ionogenic groups by achieving a more even distribution of the latter along the polymer chains. Exemplary initiators used herein include peroxodisulfates, such as potassium peroxodisulfate (KPS). The polymerization can be carried out at elevated temperature, for example a temperature in the range of 50-90°C, preferably 60-80°C, more preferably about 70°C. The polymerization time can range from 0.1 to 24 hours, preferably 0.5-6 hours, more preferably 1-3 hours.

The term "about", as used herein in connection with a numerical value, relates to a variance of ±20%, preferably ±10% of the respective value.

The amount of residual monomers can be further decreased chemically by radical post-polymerization, preferably by use of redox initiators, such as those described in DE-A 44 35 423, DE-A 44 19 518 and DE-A 44 35 422. Suitable oxidants for the post-polymerization include, but are not limited to hydrogen peroxide, t-butyl hydroperoxide, cumol hydroperoxide or alkali peroxosulfates. Suitable reducing agents include sodium disulfite, sodium hydrogen sulfite, sodium dithionite, sodium hydroxymethanesulfite, formamidine sulfinic acid, acetone bisulfate, ascorbic acid and reducing saccharides as well as water-soluble mercaptanes, such as mercapto ethanol. Post-polymerization with a redox initiator can be done in a temperature range of 10 to 100°C, preferably 20 to 90 °C. The redox agents can be added independently from each other either completely or continuously over a period of 10 minutes to 4 hours. To improve the efficiency of the redox agents, soluble salts of metal with different valencies, such as iron, copper or vanadium salts, can be added to the reaction mixture. Commonly, also complex forming agents are added, which keep the metal salts in solution under the reaction conditions.

To control the molecular weight of the polymers, a chain transfer agent may be used in the polymerization process. Suitable chain transfer agents are known in the art and include, without being limited thereto, various thiols, such as 1-dodecanethiol. Such chain transfer agents may be used in the amounts necessary to adjust the molecular weight to the desired range, with useful amounts being in the range of 0.05 to 5 wt.-%, preferably about 0.1 to 2.0 wt.-%, more preferably about 0.3 to 1.0 wt.-% with respect to total monomer mass.

The molecular weight M_{w} can be determined as described above.

The methods described herein are preferably one-pot methods for the production of pH responsive latexes.

Those skilled in the art can use the method as described herein and vary the monomers, surfactants, radical initiators, the composition of the monomer mixtures, the homogenization method, and the reaction conditions, i.e. reaction temperature, reaction time, such that they will arrive at pH responsive latexes with those rheological properties which are required for the intended purpose.

The pH responsive latexes, for example those obtained according to the described methods, may be treated with a base which is capable to deprotonate a carboxylic acid to adjust the rheological properties. Suitable bases include various hydroxides, for example alkali hydroxides, alkali oxides or ammonium hydroxides or mixtures thereof. Also suited are various amines, including, but not limited to triethanolamine, ethoxylated diamines or polyamines, such as those commercially available under the trademark name Jeffamine® (Huntsman), ammonia, 2-amino-2-methylpropanol (AMP), dimethylaminoethanol (DMAE), 3-(dimethylamino)-1,2-propanediol, and mixtures thereof. Such a method of tuning the rheological properties of a polymer system by addition of a suitable alkaline agent, i.e. a base as defined above, for neutralizing the HWSP, preferably the pH responsive latex, thus also forms part of the present invention.

The polymer systems, including those obtainable by the above-described methods, may have a HWSP content of 5 to 55 wt.-%, preferably 10 to 50 wt.-%, and more preferably 15 to 50 % relative to the complete polymer system. The remaining part of the system is made up by the continuous phase, for example water. In various embodiments, the continuous phase of the dispersion, i.e. the dispersion medium, has a water content of 60 to 100 wt.-%, preferably 70 to 90 wt.-% relative to the total weight of the dispersion medium. The remaining part of the liquid phase can be made up by non-aqueous solvents, such as those disclosed above in connection with the aqueous solvents used in the synthesis methods.

Generally, the polymer systems may have a solid content in the range of from about 10 to 60 wt.-%, preferably about 15 to 50 wt.-%, more preferably about 20 to 40 wt.-%.

The particle size of the polymer particles in the polymer systems can be a Z-average particle size of <500 nm, preferably <300 nm, more preferably in the range of 50 to 300 nm and most preferably in the range of 70 to 300 nm as determined by dynamic light scattering according to ISO 22412:2008.

In various embodiments, the polymer systems described herein and obtained using the described methods are free of phase transfer agents as commonly used for incorporation of hydrophobic monomers into standard HASE systems, such as cyclodextrins. "Free of", as used in this context, means that the compositions do contain less than 1 wt.-% of the respective type of compound, preferably less than 0.1 wt.-%, more preferably less than 0.05 wt.-%, most preferably less than 0.01 wt.-% relative to the respective system, e.g. the ph responsive latex.

The polymer systems described herein have at 0.1 % deformation and 0.1 Hz frequency has a storage modulus (G') of 10-40 Pa, preferably 20-30 Pa, and a loss modulus (G") of 40-150 Pa, preferably 50-80 Pa, and at 0.01 % amplitude a crossover frequency of > 50 Hz, preferably 50-150 Hz, more preferably 50-100 Hz and most preferably 60-90 Hz.

The described systems show viscoelastic response and therefore neither follow ideal solid nor ideal liquid behavior and display features of both borderline cases simultaneously instead. The most important parameters that characterize viscoelasticity can be obtained from oscillatory rheology measurements, as for example described in Goodwin and Hughes (Rheology for Chemists, An Introduction, 2nd Edition, RSC Publishing, 2008), and include complex dynamic modulus G*, storage modulus G', loss modulus G", phase angle δ, and damping factor (tan δ = G"/G'). The storage and loss modulus in viscoelastic solids measure the stored energy, representing the elastic portion, and the energy dissipated as heat, representing the viscous portion. The crossover frequency represents the frequency during frequency sweep oscillatory measurements at which the storage and loss moduli values are equal and tan δ = 1.

The control over the viscoelastic properties determines the performance of a polymer system, such as an adhesive, and need to be adjusted for every application. The measurement conditions, especially the temperature T and the frequency f (or the angular frequency ω) are important factors that naturally influence the specific viscoelasticity values of the parameters listed above and should ideally be adjusted to mimic the application requirements. If not otherwise indicated, the rheological parameters given in the context of the described polymer systems have been determined at a temperature of 20 ± 0.1 °C. All measurements were performed using an Anton-Paar MCR 302 rheometer with cone plate configuration measuring system having a cone diameter of 50 mm, a cone angle of 0.999°. The temperature was controlled by a Peltier element to be 20 ± 0.1 °C.

For the characterization of the setting behavior of the adhesive systems described herein as specific embodiments of the polymer systems, the complex modulus (G*), as well as storage (G') and loss (G") moduli were considered to be the most convenient and obvious measures. Different sensitivity of storage and loss moduli to the amphiphilic additives and respective changes in complex modulus enable the assessment of setting behavior and dilution response of the investigated systems.

The described adhesive systems may show an improved non-reactive setting mechanism for water-based adhesives which is called "dilution-induced thickening". This highly designed and counterintuitive setting behavior has not been described before for synthetic adhesive binder systems. In fact dilution normally tends to lower the viscosity of a polymeric system in solution, because the overall interaction between the individual macromolecular chains becomes reduced. This is especially true for water-based polyelectrolyte systems, which in concentrated solution are known to develop extraordinary high viscosities. This behavior can usually only be observed in the absence of large amount of salts, especially multivalent ions - which corresponds to aqueous solutions with low ionic strength. The physicochemical explanation is the distribution of similar electrical charges along the polyelectrolyte backbones with strongly cross-acting electrostatic repulsion which leads to an expansion of the individual polymer coils. The hydrodynamic radii of the macromolecules become strongly enlarged and lead to increased intra- and the intermolecular interactions, eventually contributing to the described significantly elevated viscosities in solution. However, upon dilution with water (or the addition of salts) the viscosity of such systems tend to drastically break down (or even collapse) after a certain threshold concentration is reached, which corresponds to falling below the limit of the average interaction distance between the electrical charges.

In practice this dilution-induced viscosity collapse can be an extremely critical and limiting factor. For example polyelectrolyte solutions are commonly used as labeling adhesives, an application where the adhesive at first has to wet and to pick up a label (certain tack properties are required), which is then transferred and attached to the substrate. The substrates most often are plastic containers or glass bottles. Additionally to the occasionally high speed of this application (e.g. > 50.000 bottles/hour on a single labeling machine) an unwanted dilution effect can be identified as a major challenge. Especially in summertime and under high humidity conditions large amounts of condensation water can be deposited at cold substrate interfaces - a situation which is very typical for the application needs of larger breweries or mineral water producers. As already described above, standard synthetic water-based glues, which are predominantly based on alkalisoluble/swellable emulsions (ASE) as polyelectrolyte-based adhesive, usually fail under these harsh conditions. Interestingly natural-based and long known casein-containing adhesives display a higher intrinsic performance in this particular application. Casein, which is a mixture of proteins from milk, can undergo certain conformational changes when it is cooled down, which leads to thickening and can counterbalance the described dilution effect. However, because casein as an adhesive component competes with the food market (and therefore inevitably is part of quite controversial discussions) and in view of its unsteady supply, costs and quality, a synthetic alternative with higher performance is highly desired.

The herein identified synthetic polymer systems (especially polyelectrolyte-based ones) are able to undergo conformational changes and/or display increased intra- and intermolecular interactions upon dilution, thus resulting in a dilution-induced thickening mechanism that can improve the setting behavior of adhesives. In faint resemblance this effect can be described as casein mimetic behavior. The concept involves the careful adjustment of polymer interactions by selectively (and reversibly) modifying physical crosslinking domains and/or the modification of the polymer chain mobility. It should be noted that less pronounced reduction of the system viscosity can readily be considered as an advantage upon the existing systems. In other words, the concept also involves systems which have a reduced sensitivity (less pronounced thinning) or in some cases even an inverse response (dilution induced thickening) to dilution with water as compared to the analogous polyelectrolytes without the presence of hydrotropes and/or adhesive systems without proper adjustment of polymer interactions, e.g. by hydrophobic contributions. In the context of the present description, "dilution induced thickening" is thus regarded as an intentionally adjusted phenomenon, which explicitly includes a reduced sensitivity towards dilution.

In the adhesive world, hydrophobic interactions are much less common as distinctive physical crosslinking sites compared to crystalline regimes. The most obvious explanation is possibly the comparably low enthalpies for hydrophobic associations. In combination with a less pronounced transition between favorable and unfavorable interaction, crystallization is simply easier to control and to stimulate in a defined manner with temperature as external trigger.

In fact it seems plausible to assume that for adhesive systems a certain molecular weight and/or multiple hydrophobic association sites along the polymer backbones are required to obtain sufficiently strong interacting physical network structures. Furthermore in order utilize hydrophobic interactions in adhesives for improved setting behavior a pronounced transition between associating and non-associating is mandatory. A very strong tendency for the phase separation of hydrophobic domains is found in aqueous media, which renders water-based adhesives as best suited systems.

It shall be noted that the strength of the hydrophobic interactions can be adjusted to a certain extent, e.g. the critical amount of hydrophobic material to create a hydrophobic domain in water is highly depending on the hydrophobicity of the individual segments taking part in the association. Because of the comparably soft interactions (low enthalpies) the interdependence with the surroundings and cumulative interactions are very important parameters.

The main motive of the described dilution-induced thickening approach is to intentionally disturb the hydrophobic domains by the addition of so-called hydrotropes, to carefully weaken the physical crosslinking sites in a controlled fashion at first. Generally speaking the strength of the hydrophobic association is very sensitive towards the concentration and the type of the hydrotropes in the system. Upon dilution with water the hydrotrope concentration in the adhesive system becomes reduced and the hydrophobic associations can partially regain their stability, which consequently leads to an increase in physical crosslinking and apparent viscosity. Obviously this behavior can be exploited to improve the setting behavior of adhesives.

Another mechanism which can contribute to obtain a dilution-induced thickening system can be the modification of the free energy of conformational changes for the related polymers by hydrotropes. In other words, the hydrotropes potentially can contribute to enhanced chain mobility and increased flexibility. Upon dilution with water this contribution would be reduced, which consequently can lead to a partial stiffening effect of the related macromolecules to increase the intra- and intermolecular interactions. Although the magnitude of this contribution is expected to be minor compared to the interference with the hydrophobic domains, it can be speculated to at least partially support the dilution-induced thickening effect.

To complete the potential interaction mechanisms of hydrotropes in the adhesive system additional positive effects apart from the dilution-induced thickening can be named. For example the hydrotropes can lower the surface tensions and therefore lead to an improved wetting behavior. Especially in case of interactions towards low energy surfaces this effect might be highly beneficial for application purposes and further support the already observed improved adhesive action of hydrophobically modified macromolecules in a cooperative manner.

The hydrotrope can principally also be used to reduce foam formation and aid to level out the surface of the adhesive. As mentioned before the film formation can be further assisted by lowering the effective T_{g} of the system. Furthermore hydrotropes with a higher partial vapor pressure compared to water can evaporate more easily and thus lead to faster drying of the adhesive films. Additionally certain hydrotropes might support the formation of an azeotrope with water, which can also be utilized for an improved drying behavior.

Last but not least the hydrotropes can be utilized to improve the solubility behavior of the hydrophobically-modified polymers. In case of the described HASE systems, hydrotropes can additionally facilitate the neutralization procedure, where it is well known that upon neutralization in concentrated/high solid systems an unwanted viscosity peak can be observed, which is related to intermediate highly interacting (starlike) structures and polymer conformations that can hinder the application drastically. The addition of hydrotropes prior to neutralization can potentially limit or suppress this viscosity peak.

In view of the above, in various embodiments, the polymer systems further comprise at least one amphiphilic additive, preferably a hydrotrope, optionally in an amount of up to 30 wt.-%, preferably 2 to 25 wt.%, more preferably 5 - 25 % relative to the total weight of the liquid phase of the polymer system.

"Hydrotropes", as used herein, are additives or solvents that can solubilize hydrophobic compounds in aqueous solution and consist of a hydrophobic and a hydrophilic moiety (like surfactants) without any tendency in water to form aggregates themselves (unlike surfactants).

In various embodiments, the at least one amphiphilic additive has no micelle forming activity or a critical micelle concentration (CMC) of greater 10⁻⁴ mol/L, preferably greater than 10⁻³ mol/L and more preferably greater than 10⁻² mol/L. In line with the common understanding in the art, the critical micelle concentration (CMC) is defined herein as the concentration of surfactants above which micelles form and all additional surfactants added to the system go to micelles.

The amphiphilic additives, preferably hydrotropes, typically have a molecular weight M_{w} < 10.000 g/mol, preferably < 2500 g/mol, more preferably < 1000 g/mol and most preferably < 500 g/mol. They may be selected from the group consisting of monoalcohols, such as, without limitation, methanol, ethanol, 1-propanol, isopropanol, 1-butanol, 2-butanol, and tert-butanol, monomeric diols, such as propanediols, butanediols, pentandiols, hexandiols, heptandiols, octandiols, monomeric and polymeric glycols, such as (poly)ethylene glycol and (poly)propylene glycol, polyols, such as glycerol, esters, such as ethylacetate, ketones, such as acetone, methylethyl ketone (MEK), methylisobutyl ketone (MIBK), ethers, such as THF, imines, such as polyethylene imine, and combinations thereof. Preferably, they are selected from the group consisting of ethylene glycol, 1,2-propanediol, glycerol, short chain polyethylene glycol derivatives, polypropylene glycol derivatives or polyethylenimine derivatives according to the above given molecular weight limit and combinations thereof. Less preferred, but also suitable, are alkoxyamines, polyetheramines, heterocyclic compounds, carboxylic acids, amines and thiols. Also suitable are certain nonionic surfactants, preferably selected from the group consisting of alkoxylated alcohols, alkoxylated fatty acid alkyl esters, alkyl glycosides, amine oxides, fatty acid alkanolamides, and polyhydroxy fatty acid amides.

In various embodiments, the polymer system in the presence of 2-25 wt.-% hydrotrope relative to the total weight of the polymer system exhibits upon dilution with 5 wt.-% water relative to the total weight of the polymer system and the hydrotrope (i) an increase, (ii) no change, or (iii) a decrease of no more than 25 %, preferably no more than 10 %, of the normalized complex modulus G*/G*₀, wherein G* represents the complex modulus of the particular polymer system sample after dilution with a defined amount of water relative to the total weight of the polymer system and the hydrotrope, and G*₀ represents the complex modulus of the corresponding system (including the given amount of hydrotrope) before dilution with water. In preferred embodiments, the polymer system exhibits (under the following conditions: 17.5 wt.-% HWSP and 76.5 wt.-% water and 6 wt.-% hydrotrope, preferably ethanol, relative to the total weight of the polymer system) upon dilution with 5 wt.-% water relative to the total weight of the polymer system including the hydrotrope (i) an increase, (ii) no change, or (iii) a decrease of no more than 25 %, preferably no more than 10 %, of the normalized complex modulus G*/G*₀, with G* and G*₀ being measured according to the measurement protocols given in the examples.

In view of the above, the present invention is also directed to a method for tuning the rheological properties of the above-described polymer system by addition of amphiphilic additives, in particular hydrotropes. The hydrotrope can be used to interfere with the interaction of the hydrophobic parts of the polymers and as a result decrease the viscosity of the system. This viscosity decrease may be controlled by type and concentration of the hydrotrope added and may be used to provide an adhesive system with a viscosity desirable for a specific application, for example application onto a substrate by known techniques, and an improved surface wetting behavior.

The decrease in viscosity can be countered by dilution of the adhesive with water, which may occur as a consequence of the surface to which the adhesive is applied being wet. In such a case, the viscosity may increase again, i.e. the so-called dilution induced thickening occurs. As already noted above, such behavior is highly desirable in specific applications, such as labeling adhesives, particularly bottle labeling adhesives.

The hydrotropes added to the adhesive system may be selected from those already described above. Typical concentrations that may be used for tuning the rheological properties of a given adhesive systems range from 0.1 to about 30 wt.-% of the hydrotrope relative to the total weight of the liquid phase of the adhesive system, preferably about 5 to 25 wt.-%. The amount of the hydrotrope used may depend on its hydrophobicity, with hydrotropes having higher hydrophobicities being generally used in lower amounts.

The polymer systems of the invention can be used as adhesives or components of adhesive compositions, in particular water-based adhesives, such as labeling adhesives, wood adhesives, paper converting (tissue & towel, packaging) adhesives or pressure sensitive adhesives (PSAs). A particularly preferred application field for the systems described herein are labeling adhesives, such as those for labeling of bottles, for example glass or plastic bottles.

The polymer systems can also be used as rheology modifiers in numerous applications, including but not limited to personal care compositions, cosmetics, paints, coatings, adhesives, and in oil recovery.

Such compositions, in particular personal care and adhesive compositions that comprise or, in the case of adhesive compositions consist of the polymer systems described herein are therefore also part of the present invention. These compositions may comprise the polymer systems as described herein either as such or in combination with further additives and auxiliaries routinely used in this field and well-known to those skilled in the art.

Also encompassed is the use of the described polymer systems in such compositions.

### Examples

*Materials:* Methyl methacrylate (MMA, Merck, >99 %), methacrylic acid (MAA, Merck, >99 %), butyl acrylate (BA, Acros Organics, 99 %), lauryl methacrylate (LMA, Aldrich, 96 %), hexadecyl methacrylate (HDMA, ABCR, 98 %), tetradecyl acrylate (TDA, ABCR, 95%) hexadecane (HD, Merck, >99 %), octadecyl acrylate (ODA, Aldrich, 97%), hexadecanoic acid (Merck, >98 %), hexadecyl alcohol (Sigma, 99 %), 1-dodecanthiol (Alfa Aesar, 98 %), potassium persulfate (KPS, Merck, >99%), 2,2'-azobis(2-methylbutyronitrile) (V-59, Wako, Japan), sodium dodecyl sulfate (SDS, BASF), sodium hydroxide (NaOH, Karl Roth GmbH, >99 %) were used as received.

*Latex preparation:* Highly acid functionalized polymers were prepared by miniemulsion polymerization. In the standard procedure 72 mg of surfactant (SDS) was dissolved in 22 ml of water, while 100 mg of initiator (KPS) was dissolved in 2 ml of water. (For oil soluble initiators, only the surfactant was dissolved in 24 ml water, while the initiator was premixed with monomers). 6g of monomer mixture (with optional 0.048 g (0.8 wt. %) chain transfer agent (CTA, 1-dodecanethiol), except for the samples where the dependence of latex stability on the surfactant concentration was investigated) was added to the surfactant solution and pre-emulsified by stirring at 1000 rpm for 10 min. The miniemulsion was prepared by ultrasonication of the pre-emulsion at 90 % amplitude for 120 s (Branson sonifier W450 Digital ½" tip) in an ice bath to prevent overheating. Then the miniemulsion was placed in a round bottom flask with magnetic stirring bar and bubbled with nitrogen to get rid of dissolved oxygen. Temperature was increased up to 70 °C and initiator was added in one shot. Samples were stirred at this temperature for 2 hours. Full conversion was monitored with solid content analyzer and confirmed by gas chromatography. Systems with higher solid content (≥30 %) were synthesized in a same way as described above, however up to 2 wt. % Dowfax-2A1 (in relation to monomer mixture) was employed as a surfactant.

*Potentiometric titration:* The neutralization behavior of the synthesized latexes was investigated by the following typical procedure. 1 ml of latex (solid content 20 %) was diluted to 50 ml with distilled water. 0,1 M NaOH solution was added to the latex at constant rate of 0,1 ml/min with constant stirring using a magnetic bar. The pH change was monitored and the data was automatically logged at regular time intervals of 30 s. In this work potentiometric titration curves are given as they were recorded, pH against the amount of added alkali solution. The recalculation to ionization degree was not performed due to ambiguity of defining zero and complete ionization points.

*Kinetic measurements:* The course of reaction was observed by withdrawing samples from the reacting mixture at regular time intervals. The withdrawn samples were immediately added to a solution of the inhibitor 4-*tert*-butylcatechol in ethanol in order to quench any further polymerization before analysis. The inhibitor concentration was 500 mg/l. The samples were analyzed using gas chromatography (GC). 1 wt% of hexan-1-ol was added to the reaction system prior to miniemulsification as nonreactive substance and internal standard for GC, in order to follow conversion over time.

*Particle size measurements:* Particle sizes, provided throughout this work are Z-average values as the most reliable and repeatable values according to ISO-13321 standard.

*Rheological investigations:* For the rheological investigations so-called neutralization curves were built by means of pH adjustment of the individual samples to different values and measuring the corresponding rheological parameters at each pH value. 12 % NaOH solution in water was used for pH adjustment. Defined amounts of NaOH solutions were added to samples slowly and then stirred with mechanical stirrer at 35 °C for 15 minutes. Highly viscous, transparent samples were left overnight in the oven at 50 °C to get rid of bubbles and assure equilibrium state.

*Oscillatory rheology measurements:* The oscillatory rheological investigations are employed to study the rheological characteristics of the systems. In these experiments the sample preparation method is standardized and is described below.

*Glass transition temperature:* The glass transition temperature (herein below also referred to as "T_{g}") of the copolymers is calculated from the T_{g} of the homopolymers of each monomer used, i.e. the polymer obtained when each monomer is polymerized individually. Specifically, the theoretical T_{g} of each copolymer can be obtained by calculation based on the Fox equation:
wherein T_{g} is the theoretical T_{g} of the copolymer, wᵢ is the proportion of the weight of the n-th monomer n to be contained in the monomer mixture, T_{g,i} is the T_{g} of the homopolymer of the n-th monomer n, and n is a positive integer which is the number of the monomers constituting the copolymer. In the calculation as used herein the monomers with less than 5% content were neglected. The T_{g} values for homopolymers can be taken from literature. For the main monomers in the examples given below, the homopolymer T_{g} values used in the calculations are briefly listed: methyl methacrylate (herein also referred to as "MMA"), T_{g} = 105°C; n-butyl acrylate (herein also referred to as "BA"), T_{g} = -56°C); 2-ethylhexyl acrylate (herein also referred to as "2EHA"), T_{g} = -70°C); acrylic acid (herein also referred to as "AA"), T_{g} = 106°C; methacrylic acid (herein also referred to as "MAA"), T_{g} = 215°C); n-butyl methacrylate (herein also referred to as "BMA"), T_{g} = 20°C). In case other comonomers than those listed above are used (in contents exceeding 5 wt.-% in relation to the total monomer content) the preferred literature reference for their homopolymer T_{g} values is the "Polymer Handbook" (J. Brandrup, E. H. Immergut, E. A. Grulke, "Polymer Handbook", 4 edition, Wiley, 2003).

### Sample Preparation:

- 12 % NaOH solution was used for latex neutralisation
- Enough time (and temperature) for equilibration after neutralization, e.g. 24 h at 50°C
- pH = 8 (±0.5)
- solid content (after neutralization) 17 % (± 2%)
- No extra added salts (apart from NaOH)
- Hydrotrope/amphiphile content as defined in particular experiments

As the values obtained from rheological measurement can strongly depend on the applied strain, stress or amplitude of the oscillation, the given values are always defined within corresponding measuring conditions.
Complex Modulus: Values are given at certain frequency and amplitude of oscillatory measurements (as it will be provided for the particular sets of experiments)
Storage modulus: Values are given at certain frequency and amplitude of oscillatory measurements. (as it will be provided for the particular sets of experiments)
Loss Modulus: Values are given at certain frequency and amplitude of oscillatory measurements. (as it will be provided for the particular sets of experiments)
Damping factor: Represents the ratio of loss and storage modulus at defined frequency and amplitude of oscillatory measurement result
Crossover frequency: represents the frequency during frequency sweep oscillatory measurements at which the storage and loss moduli values are equal and tan δ=1. The values will be given at the specific deformations where necessary.

The variation of hydrophobic modifiers gives the wide range of the possible rheological properties of the HASE systems. Below are provided the preferred and particularly preferred ranges of the rheological characteristics for the HASE systems in labeling application.

### Preferred Range:

0.01 % Deformation and 0.1 Hz Frequency.
Preferred values for storage modulus (G'): 10 - 40 Pa
Preferred values for loss modulus (G"): 40 -150 Pa
Preferred Crossover Frequency 50 - 150 Hz at 0.01 % amplitude

### Particularly Preferred Range:

0.01 % Deformation and 0.1 Hz Frequency
Preferred values for storage modulus (G'): 20 - 30 Pa
Preferred values for loss modulus (G"): = 50 - 80 Pa

Particularly Preferred crossover frequency region 50 - 100, most preferably 60-90 Hz at 0.01% amplitude

In the following experiments, rheological tuning was performed only by varying the ultrahydrophobe type and content in a base composition made of MMA/BA/MAA=55/15/30 wt. %. Of course, the tuning may be further expanded based on molecular weights, general composition *etc.*
- G' at 10 rad/s (≈1.5 Hz) and 0.1 % deformation (the values are same within the amplitudes between at least 0.005 - 50 % deformation. This is the Liner Viscoelasticity Region for the samples)
   ∘ 2 % LMA (Laurylmethacrylate) = 10 Pa
   ∘ 3 % LMA = 33 Pa
   ∘ 4 % LMA = 85 Pa
   ∘ 2 % HDMA (Hexadecylmethacrylate) = 61 Pa
- G" at 10 rad/s (≈1.5 Hz) and 0.1 % deformation (the values are same within the amplitudes between at least 0.005 - 50 % deformation. This is the Liner Viscoelasticity Region for the samples)
   ∘ 2%LMA=115Pa
   ∘ 3 % LMA = 178 Pa
   ∘ 4 % LMA = 295 Pa
   ∘ 2 % HDMA = 263 Pa
- Loss factor (tan δ)
   ∘ 2 % LMA = 11.5
   ∘ 3 % LMA = 5.4
   ∘ 4 % LMA = 3.5
   ∘ 2 % HDMA = 4.3
- Cross-over frequency at 0.1 % deformation
   ∘ 2 % LMA = 486 rad/s
   ∘ 3 % LMA = 285 rad/s
   ∘ 4 % LMA = 131 rad/s

*Equipment:* A Branson digital sonifier W450 with 1/2" tip was used for miniemulsification and a Sartorius MA 35 solid content analyzer was used to monitor conversion. Particle sizes were measured by means of dynamic light scattering (DLS) using a Zetasizer Nano Series (Nano-ZS, Malvern instruments) at a fixed scattering angle of 173° (backscattering) and at 25 °C. Z-average values are used for particle sizes. The neutralization process was monitored using an ALMEMO 2590 multimeter (Ahlborn Messtechnik). For continuous and controlled addition of alkali solution during the monitoring of the neutralization a Dosimat 765 titrator (Metrohm) was used. Metrohm photometer 662 was used for the light transmittance measurements. The rheological investigations were conducted on an Anton-Paar MCR 302 rheometer with 50 mm diameter cone/plate configuration, equipped with a Peltier element for temperature regulation and an evaporation blocking hood. The GC measurements were performed on the Agilent 7820A GC system with HP-FFAP stationary phase, 50 m column length, 0.320 mm column diameter and 0.50 µm film thickness.

### Example 1: Compositions and basic characteristics of synthesized latexes

For latex synthesis according to the above-described procedure the monomer mixtures listed in Table 1 were used, the particle sizes determined and glass transition temperatures calculated using Fox equation as described above.

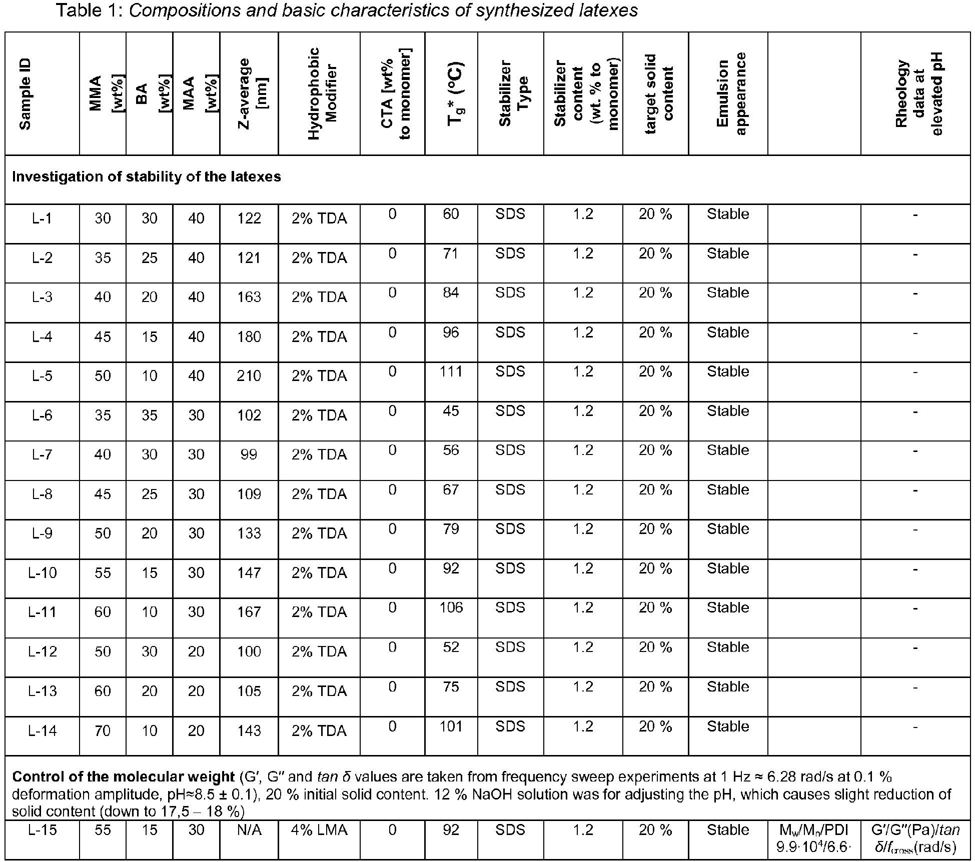

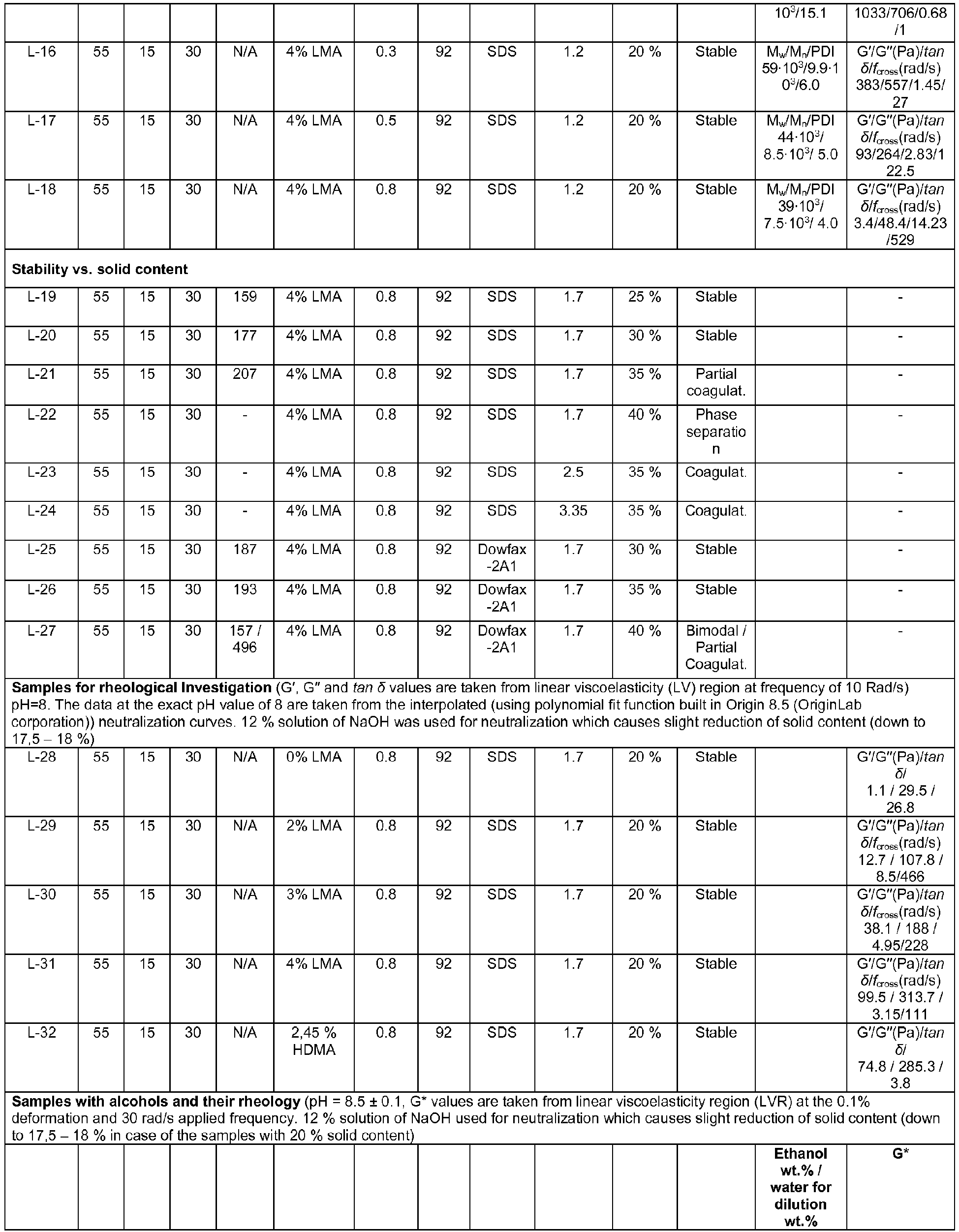

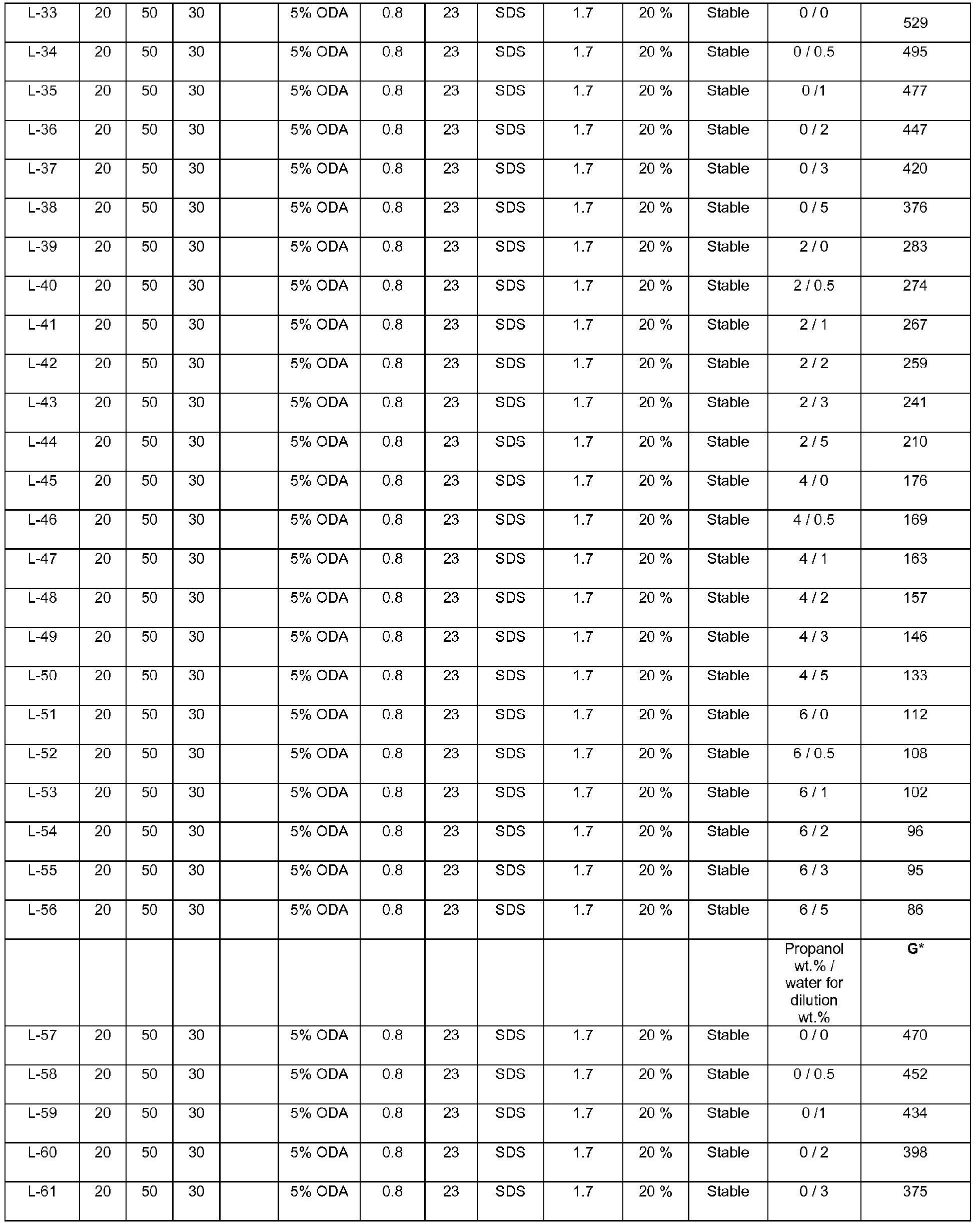

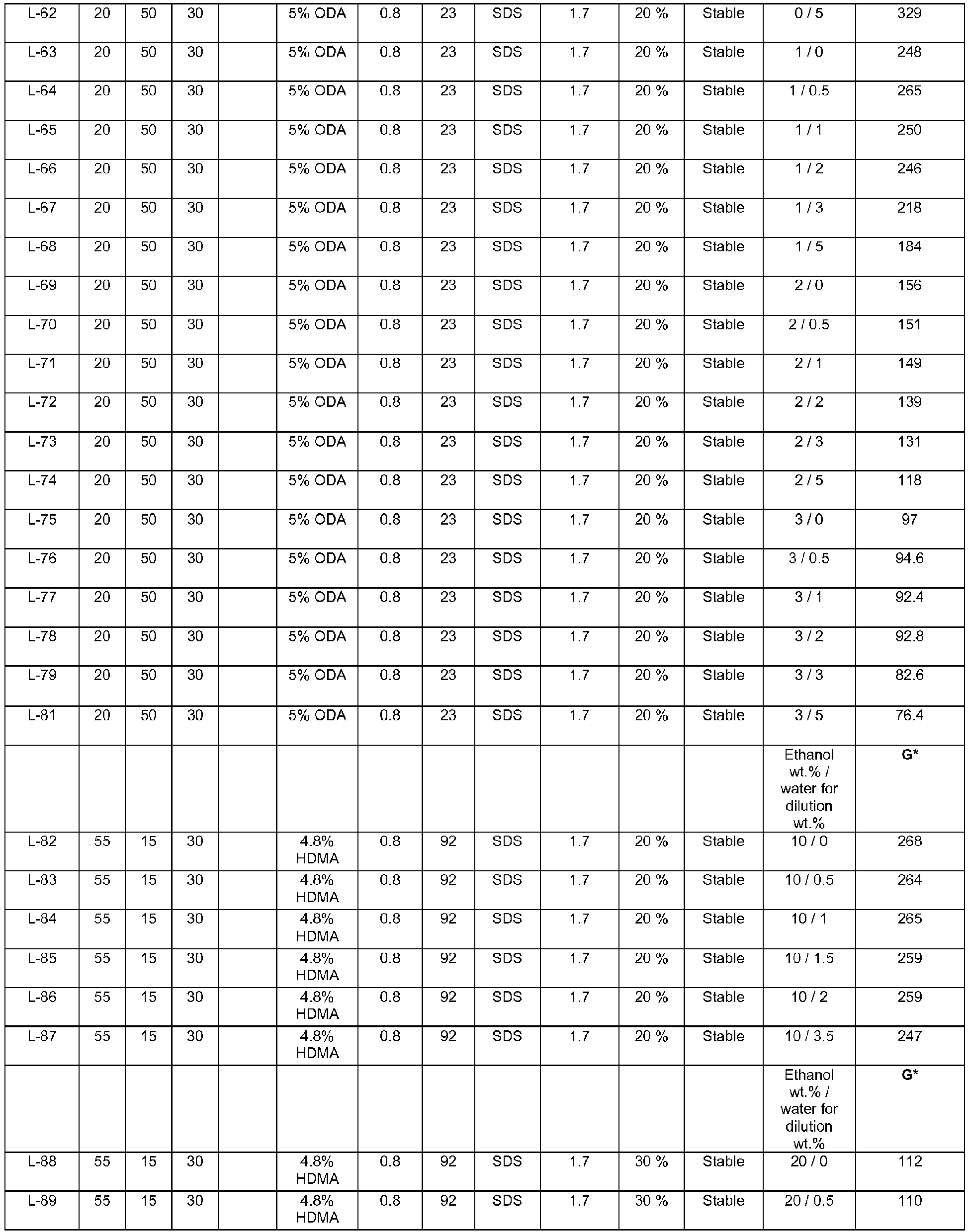

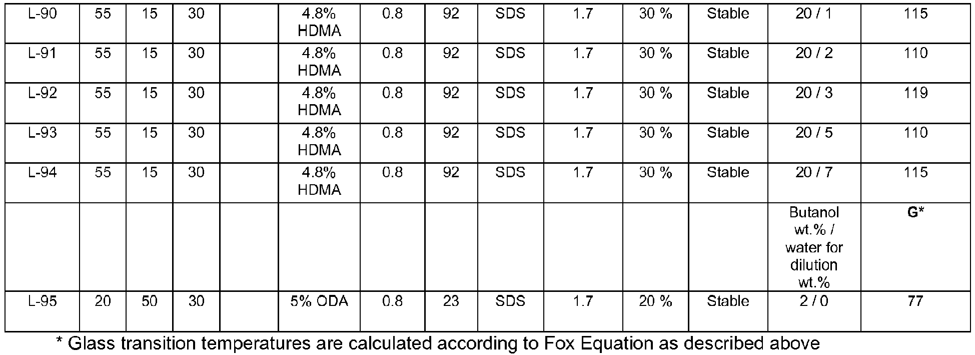

### Example 2: Potentiometric titration of synthesized latexes

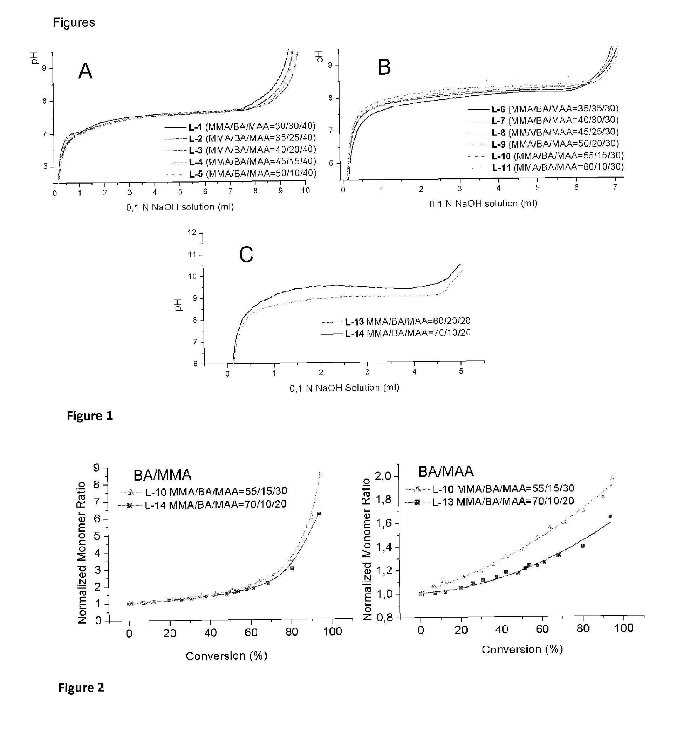

The neutralization behavior of poly-acids depends largely on the polymer backbone charge distribution and the conformational free energy. Potentiometric titration was employed to track the electrostatic potential change during the neutralization process and evaluate the basic structural features of the obtained systems. Potentiometric titration curves are given as they were recorded, pH against the amount of added alkali solution. The recalculation to ionization degree was not performed due to the ambiguity of defining zero and complete ionization points. Table 1 provides the compositions, together with particle sizes and estimated glass transition temperatures of the synthesized latexes used for potentiometric titration experiments. It should be noted that glass transition temperature, together with hydrophobic attractive forces and hydrogen bonds, defines the above mentioned conformational free energy. Figure 1 shows potentiometric titration curves for the samples L-1 to L-14, showing the sensitivity of pKₐ to the content and the ratio of nonionogenic monomers. This experiments revealed the following general trends: (1) latexes with lower content of acid groups exhibit higher apparent pKₐ values and therefore neutralization occurs at higher pH, (2) the pKₐ of the acid groups in the samples with higher acid content (40 wt%) is not sensitive to the ratio of nonionogenic monomers, while this parameter becomes clearly noticeably in the latexes with lower acid content (30 wt%). The potentiometric titration curves for these samples are provided in Figure 1A and Figure 1B. Following this trend, samples with an even lower acid content of 20 wt% exhibit distinctive features; the corresponding curves are represented on the Figure 1C. Latex L-13 shows a plateau on the neutralization curve, while latex L-14 exhibits an even more peculiar sigmoidal shape.

All the characteristics of above provided titration curves can be explained by the delicate balance between repulsive forces and conformation free energy of chains. The gradual increase of pKₐ, expressed as slight slope of the titration curves, was observed for most samples and results from the gradually increased electrostatic potential of the polymer chains upon neutralization. Furthermore the apparent pKₐ can be lowered with higher content of ionogenic groups, because the rising electrostatic repulsion facilitates the structural reorganization and the neutralization process. Only when the acid content is below 40 wt% and the repulsion forces decrease the apparent pKₐ-values become sensitive to the ratio of the noniogenic monomers. In other words the conformational free energy becomes increasingly important, which is strongly influenced by the glass transition temperature and/or hydrophobic attractive interactions. Consequently, the copolymerization of monomers of varying nature can be utilized as a convenient tool to adjust the apparent pKₐ and the neutralization behavior of the HASE systems. This is highlighted by the unusual neutralization behavior of the HASE samples with only 20 wt% acid content. At higher MMA/BA ratio (latex L-14) a peculiar sigmoidal character of the titration curve can be observed, whereas for the latex L-13 with increased BA content the neutralization occurs in a significantly narrowed-down window of pH (*plateau in the curve of the latex L-13*), which is highly desired for various applications. The last two points are the extreme cases of above described balance between repulsive forces and conformation free energy of chains, where sigmoidal shape is probably caused by coil to globule transition similarly to poly(methacrylic acid), which results in sudden change of charge density and in the fall of pH during neutralization.

### Example 3: Kinetic measurements

In free radical copolymerization a composition drift is often observed due to the different reactivities of monomers. Moreover, in heterophase systems additional parameters, such as the partial monomer solubility in water, main locus of radical generation (type of initiator applied) and various diffusion and adsorption phenomena also have a strong influence on the course of the copolymerization. In any case final properties of the HASE systems strongly depend on the monomer distribution along the polymer chains, which significantly affects the neutralization behavior as can be seen by the shape of the neutralization curves (change from slope to plateau or to sigmoidal). To investigate this phenomena, kinetic observations on the polymerization process of the latexes L-10 (MMA/BA/MAA = 55/15/30) and L-14 (MMA/BA/MAA = 70/10/20) were performed. Figure 2 represents the composition drift of the systems during copolymerization by showing residual monomer content ratios against conversion for monomer pairs BA/MMA and BA/MAA. A significant difference in composition drift is observed for the different samples. For the monomer pairs BA/MMA and BA/MAA a significantly lower composition drift was observed in case of L-14 which leads to a more even distribution of the relatively hydrophobic BA. It can be speculated that the content of more evenly distributed MMA towards BA contributes significantly to the polymer chain stiffness and therefore increases the conformation free energy, leading to the above described neutralization behavior. However, the increased glass transition temperature due to high content of MMA should not be neglected. The strong influence of MMA content on the BA/MAA drift (note the equal initial BA/MAA ratios in both systems) during polymerization is not only of particular importance for the HASE properties, but of more general mechanistic interest as well. Obviously the monomers themself can act as "quasi-regulators" in this multi-component system, i.e. regulate the reactivity of the other monomers and affect their distribution in the polymer chain.

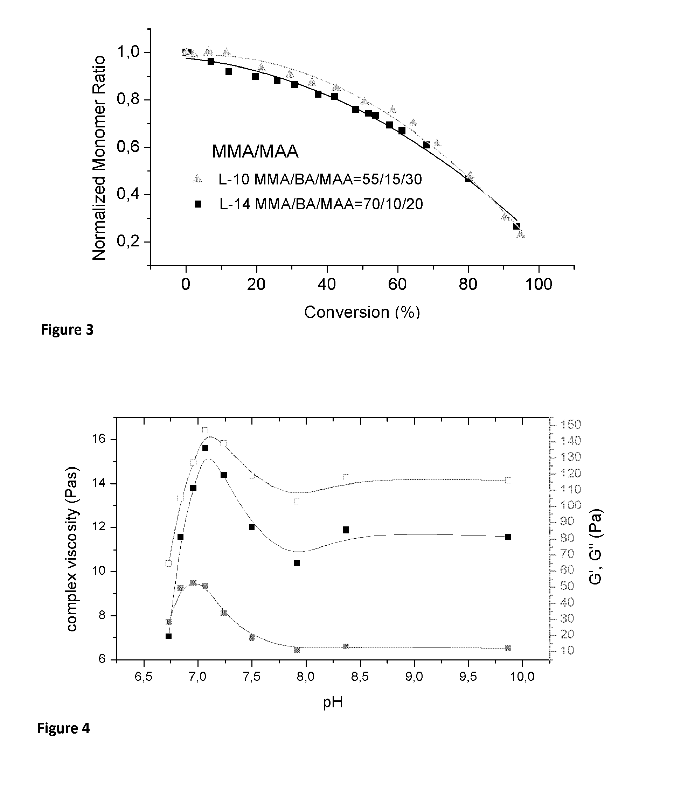

It is worth noting that there is no noticeable difference in the drift of MMA/MAA ratio between the latexes L-10 and L-14 despite the differences in BA content (Figure 3 shows residual MMA/MAA monomer content ratios against conversion. Almost no difference in composition drifts is observed). The explanation to the fact that BA turns out to be much less efficient as a quasi-regulator can be suggested taking into account the reactivities of these three monomers with respect to each other. The probability for a particular monomer to react with a growing polymer chain (macroradical) is defined by the type of the monomer and the active end-group of macroradical, as well as by the concentration of these species. For the heterophase systems it is more appropriate to consider the "local" concentration of the reacting species at the reaction site, which is the most ambiguous parameter. Changing the concentration of a monomer changes not only its consumption rate, but also the likelihood for this particular monomer to become the active end-group of macroradical and to influence the further growth of the chain. The reactivity ratios for here investigated three monomers show that the BA terminated macromonomer predominantly reacts with MMA or MAA and not with the BA. Nearly similar overall effect of reactivity ratios and concentrations leads to approximately same reactivity of these monomers. Therefore, changing BA concentration and correspondingly the likelihood of the formation of BA terminated macromonomer has no noticeable influence on the relative distribution of these two monomers. The explanation to the regulatory behavior of MMA can be suggested based on the fact that MMA reacts easily with growing macroradical, while on the other hand it can promote the introduction of BA into polymer chain. Besides, also the change of the general hydrophobicity of the system and therefore the possible effect on local concentrations of monomers should also be considered. However this last parameter cannot be precisely evaluated because of the complexity of the system.

### Example 4: Rheological behavior of synthesized latexes

*pH dependence of rheological parameters:* Dependence of rheological parameters on the pH was investigated. For this purpose pH of samples were adjusted at different values as described above. Figure 4 shows the complex viscosity (■) and storage/loss modulus (light gray and open boxes, respectively) of the composition MMA/BA/MAA=55/15/30 wt. %. 2 wt. % lauryl methacrylate as ultrahydrophobe vs. pH. In all cases strong increase and peak values of viscosity, as well as real and imaginary parts of mechanical modulus were observed, followed by partial decrease of the values at higher pH values and ending up in more or less defined plateaus in certain cases (Figure 4, Figure 5 and Figure 7).

This rheological behavior can be explained as follows: Shortly after the beginning of neutralization and still at relatively low pH values yet not completely dissolved particles form gel-like network, where swollen cores act as junction points (viscosity peak). Upon pH increase these junctions disappear or weaken and rheological behavior is defined by the ratio of electrostatic repulsion forces and relatively weak clusters formed due to hydrophobic interactions.

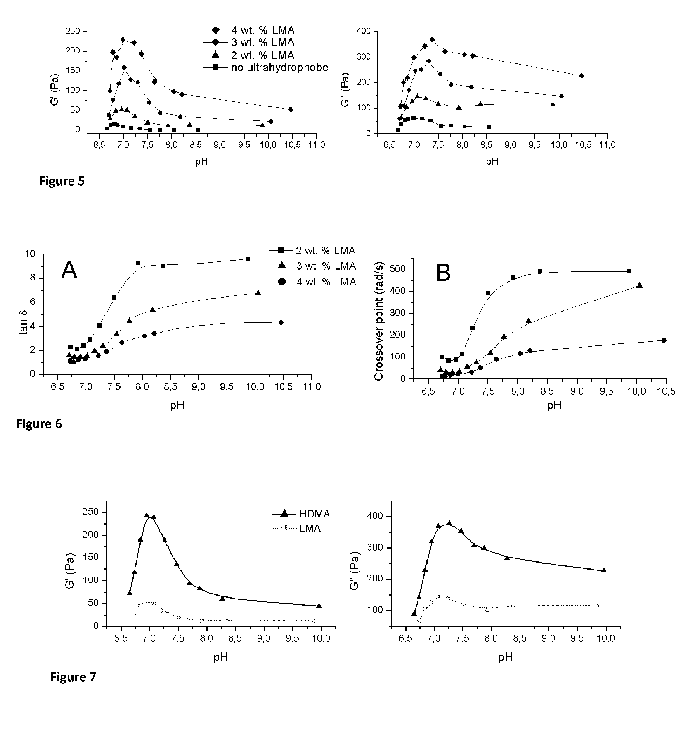

Examination of the tan δ plots (Figure 6) shows that a small reduction of tan δ values is observed at relatively low pH. Without wishing to be bound to any particular theory, it is believed that this observation can be explained by initial swelling of the latex particles upon dissolution, the phenomena which also has been suggested by Wang *et al. (*. C. Wang, K.C. Tam, R.D. Jenkins. J. Phys. Chem. B 2002, 106, 1195-1204*)* based on the light scattering behavior of the HASE systems upon neutralization. This leads to more prominent increase of the storage modulus and thus to the decrease of damping factor. Microgel-like behavior of associative polymer systems has also been observed by English *et al.* in different experiments *(*R.J. English, S.R. Raghavan, R.D. Jenkins, S.A. Khan. Journal of Rheology, 1999, 43, 5, 1175-1194*).*

*Influence of ultrahydrophobe content:* Strong influence of small amounts of ultrahydrophobes (hydrophobic modifier) on the rheological behavior was observed in the series of experiments where different amounts of hydrophobic modifier (LMA) were used. Corresponding results are described and explained below. In all cases only LMA was used as modifier and the content of other monomers were fixed at above mentioned arbitrarily defined values (Latex L-10 MMA/BA/MAA=55/15/30 wt. % with 0.8 wt % CTA).

For the reference, samples were prepared without hydrophobic modification, i.e. without introduction of long chain acrylates in the system. Figure 5 represents storage and loss moduli of different samples plotted against pH for samples with different contents of hydrophobic modifier (LMA) compared to reference sample without any ultrahydrophobic modification. Rather sharply expressed peaks in the storage modulus are caused by high sensitivity of the latter to pH.

Even though the graphs on the Figure 5 represent clearly the strongly increased values of mechanical modulus along the increased degree of hydrophobic modification, closer examination reveals several additional noteworthy trends. As it is noted on the caption of Figure 5, peaks are sharper on the graphs representing the storage modulus, which hints at its higher sensitivity to pH. This is explained by the fact that within this pH range (after the peak values of mechanical moduli) the dissolution of swollen latex particles takes place that leads to significant weakening of mechanical junction points.

In order to represent this trend more clearly and to show different sensitivity of storage and loss modulus towards pH, loss factor and crossover point between G' and G" plots vs. pH are provided below. Figure 6-A represents the plots of loss factor (tan δ) vs. pH of the samples (MMA/BA/MAA=55/15/30, 0.8 % CTA) with different LMA content. It represents the ratio of loss modulus to storage modulus at given frequencies and deformations in oscillatory experiments. The data points were picked from oscillatory experiments at 0.1 % deformation and angular frequency 10 rad/s.

Sharply expressed decrease of loss factor along the increased content of ultrahydrophobe can be directly observed, leading to the simple conclusion that increasing content of ultrahydrophobe leads to increased hydrophobic interactions and formation of stronger physically cross-linked network (increased G').

The same trend is observed on the plots of crossover points between G' and G" versus pH (figure 6-B). It can be observed that the samples with low ultrahydrophobe content act as viscoelastic fluids up to noticeably high frequencies in oscillatory experiments.

*Influence of the type of hydrophobic modifier:* In order to evaluate the effect of different hydrophobic modifiers (with different hydrophobicities) on the systems two types of acrylates, with 12 and 16 carbon chains were investigated. Similarly to above described experiments, in these cases also the increase of storage and loss modulus and decrease of loss factor was observed for the samples with hexadecyl methacrylate (Figure 7). From these it can be concluded that not only the amount of ultrahydrophobe, but also the carbon chain length, or generally - hydrophobicity of the amphiphilic polymer, determines final rheological behaviour.

### Example 5: Effect of additives and dilution induced thickening

Of major interest was the exploration of possibilities for postsynthetic tuning of obtained systems, in particular the selective modulation of the effect of hydrophobic associations on the rheological parameters. Using alcohols as an exemplary class of hydrotropes, the effect of ethanol and propan-1-ol, on the behavior of hydrophobic domains was examined. The two effects targeted in these experiments are: (1) the weakening of physical cross-links and (2) their possible reassembly upon dilution with water due to reduced concentration of alcohol in the system.

In these experiments samples with the composition MMA/BA/MAA=20/50/30 wt%, 5 wt% ODA and 0.8 wt% DDM were used. Hydrophobicity of the polymers were increased intentionally to increase the role of the hydrophobic association in the overall rheological behavior and to target it more easily.

The latexes were neutralized as given for particular experiment and a defined amount of alcohol were added. Obtained samples were further diluted with defined different amounts of water and for each sample the rheological behavior was studied.

The first important observation was the different response of the storage and loss moduli to the amount of the added alcohol. They do not change (decrease) in the parallel manner. Storage modulus is rather more sensitive to the amount of added alcohol. This trend is represented in Table 2 where the absolute values of storage and loss moduli are provided for the above mentioned sample (MMA/BA/MAA=20/50/30 wt%, 5 wt% ODA and 0.8 wt% DDM). pH of the latex was adjusted to 8,5±0.1.

**Table 2: Storage and loss moduli of the sample (MMA/BA/MAA=20/50/30 wt%, 5 wt% ODA and 0.8 wt% DDM. pH≈8.5 ± 0.1) and their dependence on the content of the added ethanol.**

| **Sample ID** | **Ethanol Content (wt.%)** | **Dynamic Modulus *G** (Pa)** | **Storage Modulus *G'* (Pa)** | **Loss Modulus *G"* (Pa)** |
|---|---|---|---|---|
| **L-33** | 0 | 529 | 160 | 504 |
| **L-39** | 2 | 305 | 50 | 279 |
| **L-45** | 4 | 176 | 18.6 | 175 |
| **L-51** | 6 | 112 | 7.5 | 112 |

Comparison of the samples with the same amounts of different amphiphilic additives shows that the influence of the additive is strongly dependent on the hydrophobicity of the additive. Respective data are provided in Table 3.

**Table 3: Rheological data for the samples with different types of additives (2 wt.% content) and otherwise same compositions**

| **Sample ID** | **Alcohol type** | **Dynamic Modulus *G** (Pa)** | **Storage Modulus *G'* (Pa)** | **Loss Modulus *G"* (Pa)** |
|---|---|---|---|---|
| **L-39** | Ethanol | 305 | 50 | 279 |
| **L-69** | Propan-1-ol | 156 | 14.2 | 156 |
| **L-95** | Butan-1-ol | 77 | 2.95 | 77 |

The described nonparallel change is caused probably by the fact that alcohols target the hydrophobic domains to greater extent and contribute to reduction of storage modulus. Also the stronger effect of propan-1-ol should be noted. The overall reduction of storage modulus with 2% propan-1-ol is higher than with 6% ethanol.

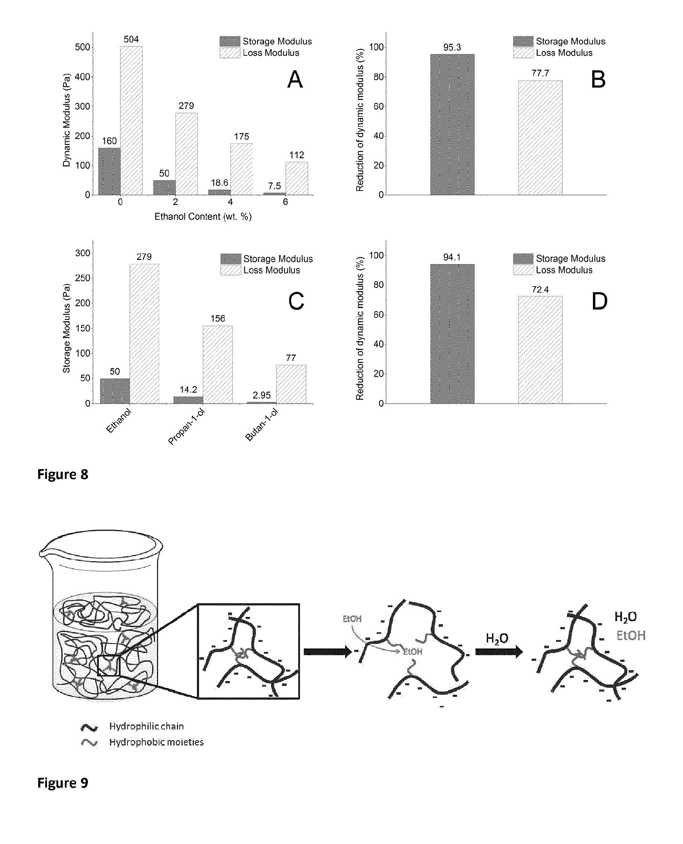

Figure 8 shows the sensitivity of the storage and loss moduli towards the content and the hydrophobicity of the amphiphilic additive on the example of given alcohols. Figure 8A shows the sensitivity of the storage and loss moduli toward the content of the ethanol, while Figure 8 B shows the reduction of these moduli upon addition of 6 % ethanol (in percent) in comparison to the system without additive. Figure 8 C is representing the sensitivity of the storage and loss moduli on the hydrophobicity of the amphiphilic additive, while the reduction of these moduli from the ethanol to butan-1-ol (in percent) is provided in Figure 8 D.

As described above, dilution induced thickening can be considered as an advantage for the fast setting of the adhesive. Dilution induced thickening effect is investigated with same rheological technique and experimental setups as described for general rheological behaviors.

The main target of this part of research is to evaluate the influence of dilution with water on the adhesive systems with different contents of additives/hydrotropes. The expected effect of the amphiphile/hydrotrope and corresponding dilution induced thickening is schematically represented in Figure 9. Dilution of the system with water is expected to reduce the effect of hydrotrope, thus increasing the mechanical properties. On the other hand, dilution of the polymer solution itself leads to the decrease of complex modulus. Balance between these two effects will define the overall effect of the dilution.

In order to observe the thickening behavior, samples with different content and type of additive were investigated and their response on the dilution was studied.

*Experiment Description:* Below given experiments were conducted at 30 rad/s frequency (≈5 Hz) and the values provided here are recorded at 10 % deformation. However, the samples are in the linear viscoelasticity region in the deformation ranges from 0.01 % to 100 % and given values are the same within these deformation ranges.

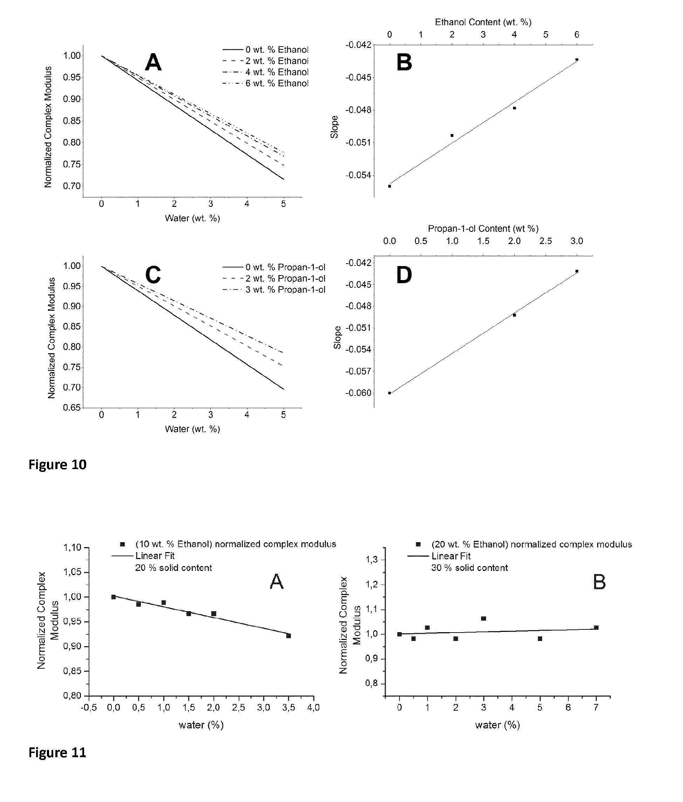

Polymer solutions with different amounts of additives (ethanol and propan-1-ol given in the Table 1, latexes L-33 to L-81) were divided into small portions and diluted with different amounts of water. Rheological experiments were conducted for each sample in order to observe the sensitivity of the complex modulus (G*) towards dilution. Respective tabular data are provided in Table 1 (latexes: L-33 to L-81). Figure 10 A shows the dilution sensitivity of the samples with different contents of the ethanol. As described, the G* values for each sample before dilution are normalized to 1 for proper comparison. Slope values of the respective linear regression plots are provided in Figure 10 B as a function of additive content. Figure 10 C provides the analogous linear regression plots for the systems with the different contents of the propan-1-ol as an additive, with the respective slope values plotted in Figure 10 D as a function of the additive content.

It should be noted that further increase of the content of the additive in described samples was found not possible, since it leads to reduction of dynamic modulus too much below the applicability range. Consequently the composition of the polymers was altered to obtain systems with higher dynamic modulus. In these experiments polymer systems with the composition MMA/BA/MAA=55/15/30 wt. % were used with 4.8 % HDMA (relative to total monomer mass) as a hydrophobic modifier and 0.8 wt. % DDM (Latexes L-82 to L-87). 10 wt. % ethanol (relative to total mass) was added to the solution and further diluted with different amounts of water. Figure 11 (A) provides the normalized values of the complex modulus for this system at different dilutions. Drastic change in the slope values can be observed compared to the above described systems (Figure 10).

To enable further increase of the additive content the samples with same composition (MMA/BA/MAA=55/15/30) and increased solid content (30 %) were investigated. Such systems allow the increase of the additive content up to 20 wt. %). As in previous experiments, the samples were diluted with different amounts of water and the normalized dynamic moduli values were plotted in Figure 11(B) (Latexes L-88 to L-94). The respective slope of the linear regression plot shows not only drastic reduction of dilution sensitivity but also slight increase of dynamic modulus, which can be considered to be the example of above described (dilution induced thickening" effect.

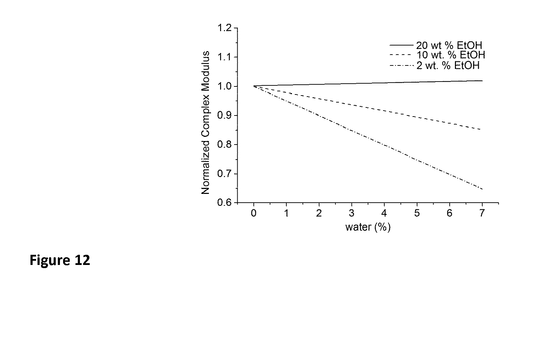

Figure 12 shows the overlay of the different systems with different composition and contents of the additive and shows the clear differences between dilution responses.

## Claims

1. Water-based polymer system comprising at least one hydrophobically modified water soluble polymer (HWSP), said HWSP
a. having an average molecular weight Mw between 10.000 g/mol and 500.000 g/mol, preferably between 15.000 and 200.000 g/mol, more preferably between 20.000 g/mol and 100.000 g/mol, most preferably 25.000 to 80.000 g/mol;
b. having a solubility of 5 g/100 mL or more in a water-based solvent system containing at least 70 wt.-%, preferably at least 80 wt.-%, more preferably at least 90 wt.-% water, at 60°C, with the remainder of the water-based solvent system optionally being an amphiphilic additive; and
c. comprising monomeric units in an amount of 0.01 to 10 wt.-%, preferably 0.1 to 10 wt.-%, more preferably 0.5 to 5 wt.-% relative to the total weight of the polymer, wherein said monomeric units comprise a hydrophobic moiety, preferably a substituted or unsubstituted C₁₀-C₂₆ hydrocarbon moiety, more preferably a substituted or unsubstituted C₁₀-C₂₆ alkyl moiety;
wherein said polymer system at 0.1 % deformation and 0.1 Hz frequency has a storage modulus (G') of 10-40 Pa, preferably 20-30 Pa, and a loss modulus (G") of 40-150 Pa, preferably 50-80 Pa, and at 0.01 % amplitude a crossover frequency of > 50 Hz, preferably 50-150 Hz, more preferably 50-100 Hz and most preferably 60-90 Hz.

2. The water-based polymer system of claim 1, wherein the HWSP is a hydrophobically modified alkali soluble associative (HASE) polymer, preferably an acrylic HASE polymer.

3. The water-based polymer system of claim 1 or 2, wherein the HWSP is obtainable by polymerizing a reaction mixture comprising a monomer mixture comprising:
(a) at least one, optionally ethylenically unsaturated, monomer comprising a hydrophobic moiety, preferably a substituted or unsubstituted C₁₀-C₂₆ hydrocarbon moiety, more preferably a substituted or unsubstituted C₁₀-C₂₆ alkyl moiety, wherein the monomer is optionally a C₃-C₅ carboxylic acid ester monomer containing a C₁₀-C₂₆ alkyl moiety, preferably a C₃-C₅ carboxylic acid C₁₀-C₂₆ alkyl ester, in an amount of 0.01 to 10 wt.-%, preferably 0.1 to 10 wt.-%, more preferably 0.5 to 5 wt.-% relative to the monomer mixture;
(b) at least one ethylenically unsaturated C₃-C₈ carboxylic acid monomer, preferably in an amount of 10 to 50 wt.-%, more preferably 20 to 50 wt.-% relative to the monomer mixture; and
(c) at least one, preferably at least two, ethylenically unsaturated C₃-C₅ carboxylic acid C₁-C₈ alkyl ester monomer(s), preferably in an amount of 50 to 89.99 wt.-%, more preferably 65 to 79.99 wt.-% relative to the monomer mixture.

4. The water-based polymer system of claim 3, wherein the ethylenically unsaturated C₃-C₅ carboxylic acid monomers are selected from methacrylic acid (MAA), acrylic acid (AA), fumaric acid, methyl maleic acid, maleic acid, itaconic acid, crotonic acid, or mixtures thereof, preferably methacrylic acid, acrylic acid or mixtures thereof, more preferably methacrylic acid.

5. The water-based polymer system of claim 3 or 4, wherein the ethylenically unsaturated carboxylic acid alkyl ester monomers are selected from acrylic acid alkyl esters, methacrylic acid alkyl esters or mixtures thereof.

6. The water-based polymer system of any one of claims 3 to 5, wherein the alkyl of the ethylenically unsaturated carboxylic acid ester monomers are branched or straight chain.

7. The water-based polymer system of any one of claims 3 to 6, wherein the at least one ethylenically unsaturated C₃-C₅ carboxylic acid C₁-C₈ alkyl ester monomer is (i) a methacrylic acid C₁-C₈ alkyl ester monomer, preferably a methacrylic acid C₁-C₃ alkyl ester monomer, more preferably a methacrylic acid methyl ester monomer; or (ii) an acrylic acid C₂-C₈ alkyl ester monomer, preferably an acrylic acid C₃-C₅ alkyl ester monomer, more preferably an acrylic acid butyl ester monomer; or (iii) a mixture of (i) and (ii).

8. The water-based polymer system of any one of claims 1 to 7, wherein the at least one monomer comprising a hydrophobic moiety is
i. a methacrylic acid ester with a moiety comprising or consisting of an C₁₀-C₂₆ alkyl group, preferably a methacrylic acid C₁₀-C₂₆ alkyl ester monomer or a methacrylic acid polyoxyalkylene C₁₀-C₂₆ alkyl ester monomer, more preferably a methacrylic acid C₁₀-C₂₂ alkyl ester monomer or a methacrylic acid polyoxyalkylene C₁₀-C₂₂ alkyl ester monomer, most preferably a methacrylic acid C₁₂-C₁₈ alkyl ester monomer or a methacrylic acid polyethylene oxide C₁₀-C₂₂ alkyl ester monomer; or
ii. an acrylic acid ester with a moiety comprising or consisting of an C₁₀-C₂₆ alkyl group, preferably an acrylic acid C₁₀-C₂₆ alkyl ester monomer or an acrylic acid polyoxyalkylene C₁₀-C₂₆ alkyl ester monomer, more preferably an acrylic acid C₁₀-C₂₂ alkyl ester monomer or an acrylic acid polyoxyalkylene C₁₀-C₂₂ alkyl ester monomer, most preferably an acrylic acid C₁₂-C₁₈ alkyl ester monomer or an acrylic acid polyethylene oxide C₁₀-C₂₂ alkyl ester monomer; or
iii. a mixture of (i) and (ii).

9. The water-based polymer system of any one of claims 3 to 7, wherein the at least one ethylenically unsaturated C₃-C₅ carboxylic acid monomer is selected from the group consisting of methacrylic acid (MAA) and acrylic acid (AA), the at least one ethylenically unsaturated C₃-C₅ carboxylic acid C₁-C₈ alkyl ester monomer is selected from the group consisting of methyl methacrylate (MMA), butyl acrylate (BA) and mixtures thereof, preferably mixtures of MMA and BA, and the at least one ethylenically unsaturated C₃-C₅ carboxylic acid ester monomer containing a C₁₀-C₂₆ alkyl moiety is selected from the group consisting of lauryl methacrylate (LMA), tetradecyl acrylate (TDA), hexadecyl methacrylate (HDMA), octadecyl acrylate (ODA) and mixtures thereof.

10. The water-based polymer system of any one of claims 3 to 9, wherein the reaction mixture further comprises a chain transfer agent, preferably in an amount of 0 to 3 wt.-%, more preferably 0.1 to 1.5 wt.-% relative to the reaction mixture.

11. The water-based polymer system of any one of claims 3 to 10, wherein the reaction mixture further comprises a stabilizer, preferably a surfactant, more preferably an anionic surfactant, most preferably sodium dodecyl sulfate (SDS) or an anionic surfactant of Formula I 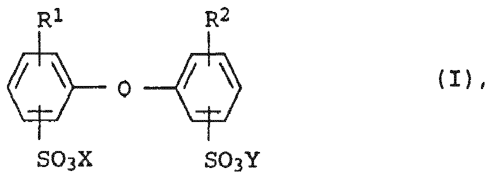 wherein R¹ and R² are independently hydrogen or C₄-C₂₄ alkyl provided that not both are hydrogen, and X and Y represent alkali metal ions or ammonium ions.

12. The water-based polymer system of any one of claims 1 to 11, wherein
a. the polymer system has a HWSP content of 5 to 55 wt.-%, preferably 10 to 50 wt.-%, more preferably 15 to 50 wt.-% relative to the polymer system;
b. the polymer system has a water content of 60 to 100 wt.-%, preferably 70 to 90 wt.-% relative to the total weight of the liquid phase of the polymer system.

13. The water-based polymer system of any one of claims 1 to 12, further comprising at least one amphiphilic additive, preferably a hydrotrope, optionally in an amount of up to 30 wt.-%, preferably 2 to 25 wt.%, more preferably 5 - 25 %, relative to the total weight of the liquid phase of the polymer system.

14. The water-based polymer system of claim 13, wherein the at least one amphiphilic additive
(a) has no micelle forming activity or a critical micelle concentration (CMC) of greater 10⁻⁴ mol/L, preferably greater than 10⁻³ mol/L; and/or
(b) has a molecular weight M_{w} of < 10.000 g/mol; and/or
(c) is selected from the group consisting of monoalcohols, monomeric diols, monomeric or polymeric glycols, polyols, esters, ketones, ethers, imines and combinations thereof, preferably selected from the group consisting of ethylene glycol, 1,2-propanediol, glycerol, short chain polyethylene glycol derivatives, polypropylene glycol derivatives or polyethylenimine derivatives with a molecular weight M_{w} of < 10.000 g/mol, and combinations thereof; and/or
(d) is selected from nonionic surfactants, preferably selected from the group consisting of alkoxylated alcohols, alkoxylated fatty acid alkyl esters, alkyl glycosides, amine oxides, fatty acid alkanolamides, and polyhydroxy fatty acid amides.

15. The water-based polymer system of any one of claims 1 to 14, wherein the polymer system in the presence of 2-25 wt.-% hydrotrope relative to the total weight of the polymer system exhibits upon dilution with 5 wt.-% water relative to the total weight of the polymer system and the hydrotrope (i) an increase, (ii) no change, or (iii) a decrease of no more than 25 %, preferably no more than 10 %, of the normalized complex modulus G*/G*₀.

16. Method for tuning the rheological properties of the water-based polymer system according to any one of claims 1 to 13, comprising adding an amphiphilic additive, preferably a hydrotrope, to decrease the viscosity of said polymer system.

17. Method for tuning the rheological properties of the water-based polymer system according to any one of claims 1 to 15, comprising neutralizing the HWSP with a suitable alkaline agent.

18. The method according to claim 16 or 17, wherein the method further comprises the step of diluting the polymer system with water to increase the viscosity of said polymer system.

19. Adhesive composition comprising or consisting of the water-based polymer system according to any one of claims 1 to 15.

20. Personal care composition comprising the water-based polymer system according to any one of claims 1 to 15.

21. Use of the water-based polymer system according to any one of claims 1 to 15 as a component of an adhesive composition, preferably a labeling adhesive, or as a component of a personal care composition.
